(19) Europäisches Patentamt
European Patent Office
Office européen des brevets

(11) **EP 4 704 065 A1**

(12) **EUROPEAN PATENT APPLICATION**

(43) Date of publication:
**04.03.2026 Bulletin 2026/10**

(21) Application number: **25198538.8**

(22) Date of filing: **27.08.2025**

(51) International Patent Classification (IPC):
**G08G 1/16** *(2006.01)*

(52) Cooperative Patent Classification (CPC):
**G08G 1/166**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **03.09.2024 US 202463690134 P**
**09.01.2025 US 202519014437**

(71) Applicant: **Waymo LLC**
**Mountain View, CA 94043 (US)**

(72) Inventors:
• ZHENG, Xushen
Mountain View, CA 94043 (US)
• SCHWAB, Devin Thomas
Mountain View, CA 94043 (US)
• DORSEY, Anne Hobbs
Mountain View, CA 94043 (US)
• HUSEYNOV, Anar
Mountain View, CA 94043 (US)
• SCOTTI, Clovis
Mountain View, CA 94043 (US)

(74) Representative: **Crook, Hugh Alexander**
**Venner Shipley LLP**
**200 Aldersgate**
**London EC1A 4HD (GB)**

(54) **PREDICTION AND NAVIGATION OF CROWDED ENVIRONMENTS IN DRIVING APPLICATIONS**

(57) The disclosed systems and techniques facilitate efficient prediction of crowd behavior and safe and courteous navigation of crowded areas in driving environments. An example disclosed system includes a sensing system and a data processing system of a vehicle. The sensing system obtains sensing data associated with a driving environment of the vehicle. The data processing system detects, based on the sensing data, presence of vulnerable road users (VRUs) in the driving environment. The data processing system applies one or more clustering metrics to form cluster(s) of VRUs, each cluster associated with a geometric shape enclosing one or more VRUs and a velocity associated with collective motion of these VRUs. The data processing system predicts, using the geometric shapes and the associated velocities, one or more VRU-blocked regions and determine a driving path of the vehicle in the driving environment.

FIG. 3B

## Description

### TECHNICAL FIELD

The instant specification generally relates to autonomous vehicles. More specifically, the instant specification relates to detection, evaluation, prediction, and navigation driving environments that include crowds.

### BACKGROUND

An autonomous (fully or partially self-driving) vehicle (AV) operates by sensing a driving environment with various electromagnetic (e.g., radar and optical) and non-electromagnetic (e.g., audio and humidity) sensors. Some autonomous vehicles chart a driving path through the environment based on the sensed data. The driving path can be determined based on Global Positioning System (GPS) data and road map data. While the GPS and the road map data can provide information about static aspects of the environment (buildings, street layouts, road closures, etc.), dynamic information (such as information about other vehicles, pedestrians, streetlights, etc.) is obtained from contemporaneously collected sensing data. Precision and safety of the driving path and of the speed regime selected by the autonomous vehicle depend on timely and accurate identification of various objects present in the driving environment and on the ability of a driving algorithm to process the information about the environment and to provide correct instructions to the vehicle controls and the drivetrain.

### BRIEF DESCRIPTION OF THE DRAWINGS

The present disclosure is illustrated by way of examples, and not by way of limitation, and can be more fully understood with references to the following detailed description when considered in connection with the figures, in which:

FIG. 1 is a diagram illustrating components of an example vehicle capable of efficient prediction of crowd behavior and safe navigation of crowded areas in driving environments, in accordance with some implementations of the present disclosure.

FIG. 2 is a diagram illustrating an example system architecture of a crowd analyzer capable of predicting crowd behavior and safely navigating crowded areas in driving environments, in accordance with some implementations of the present disclosure.

FIG. 3A illustrates identification of individual pedestrians and/or other vulnerable road users (VRUs) as part of prediction of crowd behavior and safe navigation of crowded areas in driving environments, in accordance with some implementations of the present disclosure.

FIG. 3B illustrates identification of groups of pedestrians and/or other VRUs having similar motion patterns as part of prediction of crowd behavior and safe navigation of crowded areas in driving environments, in accordance with some implementations of the present disclosure.

FIG. 3C illustrates formation of clusters based on groups of pedestrians and/or other VRUs having similar motion patterns, in accordance with some implementations of the present disclosure.

FIG. 3D illustrates identification of individual clusters as part of cluster aggregation for efficient prediction of crowd behavior and safe navigation of crowded areas in driving environments, in accordance with some implementations of the present disclosure.

FIG. 3E illustrates formation of aggregated clusters based on merging of individual clusters, in accordance with some implementations of the present disclosure.

FIG. 3F illustrates temporal evolution of an example cluster, in accordance with some implementations of the present disclosure.

FIG. 3G illustrates an example timeline of cluster formation and behavior prediction, in accordance with some implementations of the present disclosure.

FIG. 4A illustrates schematically a portion of a driving environment that includes regions where multiple pedestrians and/or other VRUs are present, in accordance with some implementations of the present disclosure.

FIG. 4B illustrates schematically one example relevance region that can be used to select a safe speed of motion of an autonomous vehicle when multiple pedestrians and/or other VRUs are present, in accordance with some implementations of the present disclosure.

FIGs. 5A-5C illustrate example clusters of non-VRU objects traveling on a highway or a city street, in accordance with some implementations of the present disclosure.

FIG. 6 illustrates an example method of predicting crowd behavior and safely navigating crowded areas in driving environments, in accordance with some implementations of the present disclosure.

FIG. 7 depicts a block diagram of an example computer device capable of deploying a crowd analyzer to predict crowd behavior and safely navigate crowded areas in driving environments, in accordance with some implementations of the present disclosure.

## SUMMARY

In one implementation, disclosed is a system that includes a sensing system of a vehicle, the sensing system configured to obtain sensing data associated with a driving environment. The system further includes a data processing system of the vehicle, the data processing system configured to apply one or more clustering metrics to a plurality of vulnerable road users (VRUs) in the driving environment to form one or more clusters of VRUs, each of the one or more clusters of VRUs associated with a geometric shape enclosing one or more VRUs of a respective cluster of VRUs, and a velocity associated with a collective motion of the one or more VRUs of the respective cluster of VRUs. The data processing system is further to predict, using the geometric shapes and the velocities associated with the one or more clusters of VRUs, one or more VRU-blocked regions for a time interval and determine, for the time interval and in view of the one or more VRU-blocked regions, a driving path of the vehicle in the driving environment.

In another implementation, disclosed is a method that includes obtaining, using a sensing system of a vehicle, sensing data associated with a driving environment and detecting, using a processing device and based on the sensing data, a plurality of VRUs in the driving environment. The method further includes applying one or more clustering metrics to the plurality of VRUs in the driving environment to form one or more clusters of VRUs, each of the one or more clusters of VRUs associated with a geometric shape enclosing one or more VRUs of a respective cluster of VRUs and a velocity associated with a collective motion of the one or more VRUs of the respective cluster of VRUs. The method further includes predicting, using the geometric shapes and the velocities associated with the one or more clusters of VRUs, one or more VRU-blocked regions for a time interval and determining, for the time interval and in view of the one or more VRU-blocked regions, a driving path of the vehicle in the driving environment.

In another implementation, disclosed is an AV that includes a sensing system configured to obtain sensing data associated with a driving environment. The AV further includes a data processing system configured to apply one or more clustering metrics to a plurality of VRUs in the driving environment to form one or more clusters of VRUs, each of the one or more clusters of VRUs associated with a geometric shape enclosing one or more VRUs of a respective cluster of VRUs and a velocity associated with a collective motion of the one or more VRUs of the respective cluster of VRUs. The data processing system is further configured to predict, using the geometric shapes and the velocities associated with the one or more clusters of VRUs, one or more VRU-blocked regions for a time interval. The data processing system is further configured to determine, for the time interval and in view of the one or more VRU-blocked regions, a driving path of the vehicle in the driving environment. The AV further includes a vehicle control system configured to direct the autonomous vehicle on the determined driving path.

## DETAILED DESCRIPTION

An autonomous vehicle or a vehicle deploying various advanced driver-assistance features can use multiple sensor modalities to facilitate detection of objects in driving environments and predict future trajectories of such objects. Sensors can include radio detection and ranging (radar) sensors, light detection and ranging (lidar) sensors, digital cameras, ultrasonic sensors, positional sensors, and the like. Different types of sensors can provide different and complementary benefits. For example, radars and lidars emit electromagnetic signals (radio signals or optical signals) that reflect from the objects and carry back information about distances to the objects (e.g., determined from time of flight of the signals) and velocities of the objects (e.g., from the Doppler shift of the frequencies of the reflected signals). Radars and lidars can scan an entire 360-degree view by using a series of consecutive sensing frames. Sensing frames can include numerous reflections covering the driving environment in a dense grid of return points. Each return point can be associated with the distance to the corresponding reflecting object and a radial velocity (a component of the velocity along the line of sight) of the reflecting object.

Lidars, by virtue of their sub-micron or micron optical wavelengths, have high spatial resolution, which facilitates obtaining many closely-spaced return points from the same object. This enables accurate detection and tracking of objects once the objects are within the reach of lidar sensors. Radar sensors are inexpensive, require less maintenance than lidar sensors, have a larger working range of distances, and have a good tolerance of adverse weather conditions. Cameras (e.g., photographic or video cameras) capture two-dimensional projections of the three-dimensional outside space onto an image plane (or some other non-planar imaging surface) and can acquire high resolution images at both shorter distances and longer distances.

Various sensors of a vehicle's sensing system (e.g., lidars, radars, cameras, and/or other sensors, such as sonars) capture complementary depictions of objects located in the environment of the vehicle. The vehicle's perception system identifies objects based on objects' appearance, state of motion, trajectory of the objects, and/or other properties. For example, lidars can accurately map a shape of one or more objects (using multiple return points) and can further determine distances to those objects and/or the objects' velocities. Cameras can obtain visual images of the objects. The perception system can map shapes and locations (obtained from lidar data) of various objects in the environment to their visual depictions (obtained from camera data) and perform a number of computer vision operations, such as segmenting (clustering) sensing data among individual objects (clusters), identifying types/makes/models/etc. of the individual objects, and/or the like. A prediction and planning system can track motion (including but not limited to locations and velocities) of various objects across multiple times and then extrapolate the previously observed motion into the future. This predicted motion can be used by various vehicle control systems to select a driving path that takes these objects into account, e.g., avoids the objects, slows the vehicle down in the presence of the objects, and/or takes some other suitable actions.

With increasing the number of objects in the driving environments, the computational load on the perception and planning system grows significantly. Particularly challenging are situations of high pedestrian traffic on or near roadways, e.g., popular tourist spots, sports games, parades, protests, proximity of pedestrian areas, rail or bus terminals, airports pickups/drop-offs, and/or the like. Such situations are referred to as "crowded environments" or, simply, "crowds" herein. A crowd can include from several to tens or hundreds (or more) members or participants. Presence of a crowd gives rise to special technological and driving challenges for autonomous vehicles. For example, predicting behavior of all individual participants in real time can be very difficult and require large processing and memory on-board resources. Presence of a nearby crowd reduces the acceptable range of driving paths (trajectories), including places where the vehicle cannot or should not travel, limitations on how fast the vehicle can safely travel, and/or the like. Such crowd-imposed limitations can be either direct, e.g., when pedestrians are walking on the roadways (e.g., during a protest or political rally), or potential, e.g., when the crowd is presently confined to sidewalks or other non-drivable areas but there is a high likelihood that it can move into the roadway in the immediate future (e.g., responsive to encountering an obstacle on the sidewalk, rushing across the roadway towards a stopped bus or rail car, and/or the like). As a result, challenges of safely negotiating such regions are confounded by the demands for high computational resources required to track and predict behavior of many crowd participants.

Aspects and implementations of the present disclosure address these and other challenges of the modern perception, prediction, and planning technology by systems and techniques for efficient prediction of crowd behavior and safe navigation of crowded areas. Despite crowds potentially having a large number of participants, motion of crowds in typical driving situations is usually constrained to at least some degree so that the number of degrees of freedom of a crowd is reduced considerably compared with the same number of independent agents. In particular, a crowd (or at least portions thereof) may have a common purpose (e.g., to reach a stadium entrance, to march to and/or remain at a place of political rally, and/or the like). Correspondingly, similar to a motion of a fluid having local variations of speed and direction of motion around some average flow pattern, a motion of a crowd can have a predominant general direction and speed (which can vary in space and time). In some instances, a crowd may not have a common purpose-e.g., a tourist crowd-but can include multiple smaller groups staying mostly together while moving (even though changing in shape). In some implementations, an object detection system can process sensing data for an environment of an autonomous vehicle (e.g., car, truck, etc.) to identify locations and types of various objects in the environment and estimate various characteristics of motion of the objects, e.g., speed and direction. A behavior prediction (BP) system of the autonomous vehicle can further predict motion (behavior) of the objects for a certain time horizon, e.g., several seconds. Subsequently, various objects identified as pedestrians and/or any other vulnerable road users (VRUs), such as bicyclists, scooter riders, persons riding a wheelchair (propelled by muscle force or any motors), animals (domestic and/or wild), riders of horses or other equines, can be grouped into clusters whose individual members are hypothesized to move in a similar fashion to other agents of the same cluster. Throughout this disclosure, the term "pedestrian" should be understood as also including any VRUs which are to be understood as road users unprotected by a body of a vehicle around them and often not lacking an ability to travel with a significant speed, acceleration, and/or agility (e.g., from a lack of high-powered engines).

Initial clusters can be formed using one or more heuristics and/or outputs of one or more machine-learning models, including but not limited to distance from a candidate pedestrian to at least one pedestrian already included in the cluster not exceeding a (first) threshold distance, projected-after a certain time horizon-distance from the candidate pedestrian to at least one pedestrian in the cluster (or the cluster's centroid), velocity (including both speed and direction of motion) of the candidate pedestrian being within a certain tolerance range from a representative velocity $\vec{V}$ of the pedestrians in the cluster or a velocity, and/or the like. Objects identified as belonging to a given individual cluster can be collectively characterized by a suitable bounding shape and the representative velocity. For example, the bounding shape can be a convex hull, e.g., a polyline circumscribed around the outer boundaries of individual objects in the cluster. The representative velocity $\vec{V}$ can be a centroid (e.g., average or median) velocity of the individual pedestrians in the cluster or a velocity of a specific pedestrian in the cluster whose velocity is the closest to the centroid velocity. Additionally, each cluster can be characterized by a spread $\Delta V$ of the velocities of individual pedestrians. Spread $\Delta V$ may indicate how likely the cluster is to maintain its shape and area. For example, positive spreads $\Delta V > 0$ may indicate that the cluster size is increasing along one or more dimensions, negative spreads $\Delta V < 0$ may indicate that respective clusters may decrease (become more compact and denser) along one or more dimensions, and (approximately) zero spreads $\Delta V \approx 0$ may indicate

that the cluster's size remains substantially unchanged (over some time horizon, e.g., several seconds). In some implementations, individual initial clusters can be further combined into aggregated clusters, e.g., using one or more techniques of hierarchical agglomerative clustering (HAC) or other similar techniques. Subsequently, the motion of each cluster can be predicted using the initial location $\vec{R}_0$ of the cluster's representative member (or centroid) and the representative velocity $\vec{V}$, e.g., after time $t$, the location of the representative member can be estimated as $\vec{R}(t) = \vec{R}_0 + \vec{V}t$. Additionally, the spread $\Delta V$ of the velocities in the cluster can be used to estimate a potential change in the shape of the cluster, e.g., with the size of the cluster growing (or decreasing) approximately at the rate of $\Delta Vt$. The corresponding location of the projected clusters (translated and changed as described above) can indicate the area which the autonomous vehicle is to avoid at time $t$. Correspondingly, a planner system (also referred to as a planner herein) of the autonomous vehicle can chart a driving path that avoids regions of the environment occupied by clusters at various times $t$.

Additional techniques can be deployed to constrain a speed of the autonomous vehicle in view of the density of pedestrians and/or other VRUs near the driving path of the autonomous vehicle. In some implementations, a certain distance $L$ along the trajectory can be set, e.g., empirically, and the number of agents within this distance can be computed. The speed of the autonomous vehicle can be determined based on a number of heuristics. In one example, a distance $d_{MIN}$ from the driving path to the closest pedestrian can be determined. In another example, a (linear) density $n$ of the pedestrians can be determined, e.g., $n = N_{L \times 2D}/L$, as the total number of pedestrians $N_{L \times 2D}$ within a relevance area of the environment, e.g., a rectangle of length $L$ along the driving path and width $2D$ in the lateral direction (with the width parameter $D$ set empirically, e.g., based on field testing). The speed of the autonomous vehicle $U$ can then be set as a suitable function $f(.)$ of the minimum distance $d_{MIN}$ and the density $n$, $U = f(d_{MIN}, n)$. The function $f(.)$ can decrease (increase) with decreasing (increasing) distance $d_{MIN}$ and/or increasing (decreasing) density $n$.

Advantages of the disclosed implementations include, but are not limited to, efficient modeling of crowd behavior in the instances where a large number of pedestrians are present within the driving environment as well as facilitating navigation of crowded areas with a safe, courteous, and comfortable (to other road users) speed that is determined in view of the actual crowd density in the most relevant areas near the autonomous vehicle driving path. Slowing the autonomous vehicle down in the regions of high crowd density has an additional benefit that the onboard perception system has more time to process a larger number of objects in the relevant area. This leads to improved driving trajectory selection and enhanced safety of driving operations.

In those instances where description of the implementations refers to autonomous vehicles, it should be understood that similar techniques can be used in various driver-assistance systems that do not rise to the level of fully autonomous driving systems. In some embodiments, disclosed techniques can be used in Level 2 driver-assistance systems that implement steering, braking, acceleration, lane centering, adaptive cruise control, etc., as well as other driver support. In some embodiments, the disclosed techniques can be used in Level 3 driving-assistance systems capable of autonomous driving under limited (e.g., highway) conditions. In such systems, fast and accurate detection and tracking of objects can be used to inform the driver of the approaching vehicles and/or other objects, with the driver making the ultimate driving decisions (e.g., in Level 2 systems), or to make certain driving decisions (e.g., in Level 3 systems), such as reducing speed, changing lanes, etc., without requesting driver's feedback.

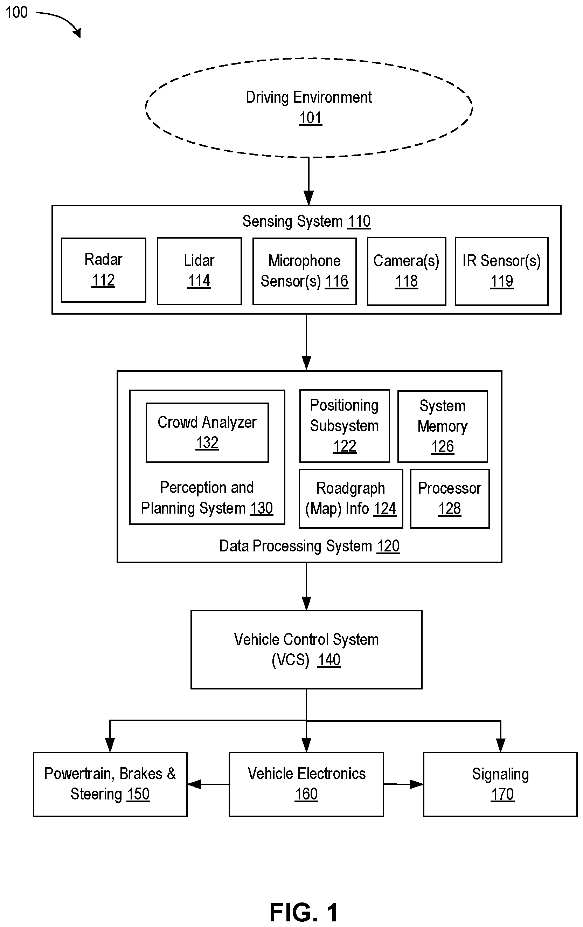

FIG. 1 is a diagram illustrating components of an example vehicle 100 capable of efficient prediction of crowd behavior and safe navigation of crowded areas in driving environments, in accordance with some implementations of the present disclosure. In some implementations, vehicle 100 can be an autonomous vehicle. Autonomous vehicles can include motor vehicles (cars, trucks, buses, motorcycles, all-terrain vehicles, recreational vehicles, any specialized farming or construction vehicles, and the like), or any other self-propelled vehicles (e.g., robots, factory or warehouse robotic vehicles, sidewalk delivery robotic vehicles, etc.) capable of being operated in a self-driving mode (without a human input or with a reduced human input).

A driving environment 101 can include any objects (animate or inanimate) located outside the vehicle 100, such as roadways, buildings, trees, bushes, sidewalks, bridges, mountains, other vehicles, pedestrians, and so on. The driving environment 101 can be urban, suburban, rural, and so on. In some implementations, the driving environment 101 can be an off-road environment (e.g., farming or other agricultural land). In some implementations, the driving environment can be an indoor environment, e.g., the environment of an industrial plant, a shipping warehouse, a hazardous area of a building, and so on. In some implementations, the driving environment 101 can be substantially flat, with various objects moving parallel to a surface (e.g., parallel to the ground). In other implementations, the driving environment can be three-dimensional and can include objects that are capable of moving along all three directions (e.g., balloons, leaves, etc.). Hereinafter, the term "driving environment" should be understood to include all environments in which an autonomous motion of self-propelled vehicles can occur. For example, "driving environment" can include any possible flying environment of an aircraft or a marine environment of a naval vessel. The objects of the driving environment 101 can be located at any distance from vehicle 100, from close distances of several feet (or less) to several miles (or more).

As described herein, in a semi-autonomous or partially autonomous driving mode, even though the vehicle assists with one or more driving operations (e.g., steering, braking and/or accelerating to perform lane centering, adaptive cruise control, advanced driver assistance systems (ADAS), or emergency braking), the human driver is expected to be situationally aware of the vehicle's surroundings and supervise the assisted driving operations. Here, even though the vehicle may perform all driving tasks in certain situations, the human driver is expected to be responsible for taking control as needed.

Although, for brevity and conciseness, various systems and methods can be described below in conjunction with autonomous vehicles, similar techniques can be used in various driver assistance systems that do not rise to the level of fully autonomous driving systems. In the United States, the Society of Automotive Engineers (SAE) have defined different levels of automated driving operations to indicate how much, or how little, a vehicle controls the driving, although different organizations, in the United States or in other countries, may categorize the levels differently. More specifically, disclosed systems and methods can be used in SAE Level 2 (L2) driver-assistance systems that implement steering, braking, acceleration, lane centering, adaptive cruise control, etc., as well as other driver support. The disclosed systems and methods can be used in SAE Level 3 (L3) driving-assistance systems capable of autonomous driving under limited (e.g., highway) conditions. Likewise, the disclosed systems and methods can be used in vehicles that use SAE Level 4 (L4) self-driving systems that operate autonomously under most regular driving situations and require only occasional attention of the human operator. In all such driving-assistance systems, accurate lane estimation can be performed automatically without a driver input or control (e.g., while the vehicle is in motion) and result in improved reliability of vehicle positioning and navigation and the overall safety of autonomous, semi-autonomous, and other driver assistance systems. As previously noted, in addition to the way in which SAE categorizes levels of automated driving operations, other organizations, in the United States or in other countries, may categorize levels of automated driving operations differently. Without limitation, the disclosed systems and methods herein can be used in driving assistance systems defined by these other organizations' levels of automated driving operations.

The example vehicle 100 can include a sensing system 110. The sensing system 110 can include various electromagnetic (e.g., optical) and non-electromagnetic (e.g., acoustic) sensing subsystems and/or devices. The sensing system 110 can include a radar (or multiple radars) 112, which can be any system that utilizes radio or microwave frequency signals to sense objects within the driving environment 101 of the vehicle 100. The radar(s) 112 can be configured to sense both the spatial locations of the objects and velocities of the objects (e.g., using the Doppler shift technology). Hereinafter, "velocity" refers to both how fast the object is moving (the speed of the object) as well as the direction of the object's motion. In some implementations, the sensing system 110 can include a lidar 114, which can be a laser-based unit capable of determining distances to the objects (including their spatial dimensions) and velocities of the objects in the driving environment 101. Each of radar 112 and lidar 114 can include a coherent sensor, such as a frequency-modulated continuous-wave (FMCW) lidar or radar sensor. For example, radar 112 can use heterodyne detection for velocity determination. In some implementations, the functionality of a ToF and coherent radar is combined into a radar unit capable of simultaneously determining both the distance to and the radial velocity of the reflecting object. Such a unit can be configured to operate in an incoherent sensing mode (ToF mode) and/or a coherent sensing mode (e.g., a mode that uses heterodyne detection) or both modes at the same time. In some implementations, multiple radars 112 or lidars 114 can be mounted on vehicle 100.

Lidar 114 can include one or more light sources producing and emitting signals and one or more detectors of the signals reflected back from the objects. In some implementations, lidar 114 can perform a 360-degree scanning in a horizontal direction. In some implementations, lidar 114 can be capable of spatial scanning along both the horizontal and vertical directions. In some implementations, the field of view can be up to 90 degrees in the vertical direction (e.g., with at least a part of the region above the horizon being scanned with lidar signals). In some implementations, the field of view can be a full sphere (consisting of two hemispheres).

The sensing system 110 can further include one or more cameras 118 to capture images of the driving environment 101. The images can be two-dimensional projections of the driving environment 101 (or parts of the driving environment 101) onto an imaging surface (flat or non-flat) of the camera(s). Some of the cameras 118 of the sensing system 110 can be video cameras configured to capture a continuous (or quasi-continuous) stream of images of the driving environment 101. The sensing system 110 can also include one or more infrared (IR) sensors 119. The sensing system 110 can further include one or more microphone sensors 116 that can be used to capture audio data for the driving environment, e.g., sirens and other sounds of emergency vehicles.

The sensing data obtained by the sensing system 110 can be processed by a data processing system 120 of vehicle 100. For example, the data processing system 120 can include a perception and planning system 130. The perception and planning system 130 can be configured to detect and track objects in the driving environment 101 and to recognize the detected objects. For example, perception and planning system 130 can analyze images captured by the cameras 118 and can be capable of detecting traffic light signals, road signs, roadway layouts (e.g., boundaries of traffic lanes, topologies of intersections, designations of parking places, and so on), presence of obstacles, and the like. Perception and planning system 130 can further receive radar sensing data (Doppler data and ToF data) and determine distances to various objects in the driving environment 101 and velocities (radial and, in some implementations, transverse, as described below) of such objects. In some implementations, perception and planning system 130 can use radar data in combination with the data captured by the camera(s) 118, as described in more detail below.

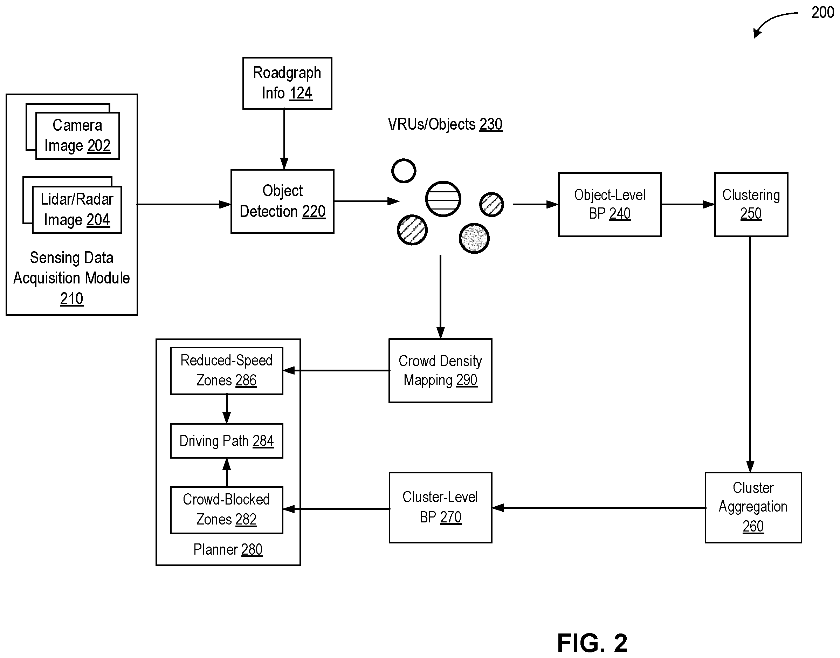

Perception and planning system 130 monitors how the driving environment 101 evolves with time, e.g., by keeping track of the locations and velocities of the animate objects (e.g., relative to Earth and/or the AV) and predicting how various objects are to move in the future, over a certain time horizon, e.g., 1-10 seconds or more. Perception and planning system 130 can include a crowd analyzer 132 that predicts crowd behavior and identifies safe speed regime for navigation of driving environment 101, e.g., as disclosed in more detail below in conjunction with **FIGs. 2-5.** Crowd analyzer 132 can include one or more heuristic modules and one or more trainable MLMs that can process data of multiple modalities, e.g., camera data, radar data, lidar data, audio data, roadgraph data, and/or the like.

Perception and planning system 130 can also receive information from a positioning subsystem 122, which can include a GPS transceiver and/or inertial measurement unit (IMU) (not shown in **FIG. 1**), configured to obtain information about the position of the AV relative to Earth and its surroundings. Positioning subsystem 122 can use the positioning data, e.g., GPS and IMU data) in conjunction with the sensing data to help accurately determine the location of vehicle 100 with respect to fixed objects of the driving environment 101 (e.g., roadways, lane boundaries, intersections, sidewalks, crosswalks, road signs, curbs, surrounding buildings, etc.) whose locations can be provided by roadgraph information 124. In some implementations, data processing system 120 can receive non-electromagnetic data, such as audio data (e.g., ultrasonic sensor data or data from one or more microphone sensors 116 detecting emergency vehicle sirens), temperature sensor data, humidity sensor data, pressure sensor data, meteorological data (e.g., wind speed and direction, precipitation data), and the like.

Various systems and subsystems of data processing system 120 can have software stored in one or more system memory 126 devices. System memory 126 can include any volatile or non-volatile memory devices, such as read-only memory (ROM), random-access memory (RAM), electrically erasable programmable read-only memory (EEPROM), flash memory, flip-flop memory, or any other device capable of storing data. RAM can be a dynamic random-access memory (DRAM), synchronous DRAM (SDRAM), a static memory, such as static random-access memory (SRAM), and the like. In some implementations, system memory 126 can be an on-chip memory.

Operations of data processing system 120 can be performed by one or more processors 128, which can include CPU(s), GPU(s), field-programmable gate arrays (FPGAs), application-specific integrated circuits (ASICs), and the like. "Processor" herein refers to a device capable of executing instructions encoding arithmetic, logical, or I/O operations, e.g., stored in system memory 126. In some implementations, processor(s) 126 and the system memory 130 can be implemented as a single controller, e.g., as a FPGA.

The data generated by perception and planning system 130, positioning subsystem 122, and/or the other systems and components of data processing system 120 can be used by an autonomous driving system, such as vehicle control system (VCS) 140. The VCS 140 can include one or more algorithms that control how vehicle 100 is to behave in various driving situations and environments. For example, the VCS 140 can include a navigation system for determining a global driving route to a destination point. The VCS 140 can also include a driving path selection system for selecting a particular path through the immediate driving environment, which can include selecting a traffic lane, negotiating a traffic congestion, choosing a place to make a U-turn, selecting a trajectory for a parking maneuver, and so on. The VCS 140 can also include an obstacle avoidance system for safe avoidance of various obstructions (rocks, stalled vehicles, a jaywalking pedestrian, and so on) within the driving environment of the AV. The obstacle avoidance system can be configured to evaluate the size of the obstacles and the trajectories of the obstacles (if obstacles are animated) and select an optimal driving strategy (e.g., braking, steering, accelerating, etc.) for avoiding the obstacles.

Algorithms and modules of VCS 140 can generate instructions for various systems and components of the vehicle, such as the powertrain, brakes, and steering 150, vehicle electronics 160, signaling 170, and other systems and components not explicitly shown in **FIG. 1.** The powertrain, brakes, and steering 150 can include an engine (internal combustion engine, electric engine, and so on), transmission, differentials, axles, wheels, steering mechanism, and other systems. The vehicle electronics 160 can include an on-board computer, engine management, ignition, communication systems, carputers, telematics, in-car entertainment systems, and other systems and components. The signaling 170 can include high and low headlights, stopping lights, turning and backing lights, horns and alarms, inside lighting system, dashboard notification system, passenger notification system, radio and wireless network transmission systems, and so on. Some of the instructions output by the VCS 140 can be delivered directly to the powertrain, brakes, and steering 150 (or signaling 170) whereas other instructions output by the VCS 140 are first delivered to the vehicle electronics 160, which generates commands to the powertrain, brakes, and steering 150 and/or signaling 170.

In one example, the VCS 140 can determine that an obstacle identified by the data processing system 120 is to be avoided by decelerating the vehicle until a safe speed is reached, followed by steering the vehicle around the obstacle. The VCS 140 can output instructions to the powertrain, brakes, and steering 150 (directly or via the vehicle electronics 160) to: (1) reduce, by modifying the throttle settings, a flow of fuel to the engine to decrease the engine rpm; (2) downshift, via an automatic transmission, the drivetrain into a lower gear; (3) engage a brake unit to reduce (while acting in concert with the engine and the transmission) the vehicle's speed until a safe speed is reached; and (4) perform, using a power steering mechanism, a steering maneuver until the obstacle is safely bypassed. Subsequently, the VCS 140 can output instructions to the powertrain, brakes, and steering 150 to resume the previous speed settings of the vehicle.

In the description of figures below, the term "vehicle" is used to indicate an automotive machine deploying the disclosed techniques to identify and navigate BLs. The term "object" is used to indicate any road user that can intentionally or accidentally block the roadway or any portion of it. "Object" can include any type of vehicle, e.g., car, truck, van, SUV, vehicle pulling a trailer, motorcycle, scooter, bicycle, etc., but can also include an officer, an emergency responder, a pedestrian, an animal, and/or the like.

FIG. 2 is a diagram illustrating an example system architecture 200 of a crowd analyzer capable of predicting crowd behavior and safely navigating crowded areas in driving environments, in accordance with some implementations of the present disclosure. An input into the crowd analyzer (e.g. crowd analyzer 132, with reference to FIG. 1) can include data obtained by sensing system 110 (e.g., by radar 112, lidar 114, camera(s) 118, and/or other sensors). The obtained data can be provided via a sensing data acquisition module 210 that can decode, preprocess (e.g., denoise, upsample, downsample, etc.), reformat, crop, etc., sensing data to a format accessible to the crowd analyzer. In one example implementation, sensing data acquisition module 210 can obtain a sequence of camera images 202, e.g., two-dimensional projections of the driving environment (or a portion thereof) on an array of sensing detectors (e.g., charged coupled device or CCD detectors, complementary metal-oxide-semiconductor or CMOS detectors, and/or the like). Individual camera images can have pixels of various intensities of one color (for black-and-white images) or multiple colors (for color images). Camera images 202 can be panoramic (360-degree) images or images depicting a specific portion of the driving environment. Camera images 202 can include a number of pixels. The number of pixels can depend on the resolution of the image. Each pixel can be characterized by one or more intensity values. A black-and-white pixel can be characterized by one intensity value, e.g., representing the brightness of the pixel, with value 1 corresponding to a white pixel and value 0 corresponding to a black pixel (or vice versa). The intensity value can assume continuous (or discretized) values between 0 and 1 (or between any other chosen limits, e.g., 0 and 255). Similarly, a color pixel can be represented by more than one intensity value, such as three intensity values (e.g., if the RGB color encoding scheme is used) or four intensity values (e.g., if the CMYK color encoding scheme is used). Camera images 202 can be preprocessed, e.g., downscaled (with multiple pixel intensity values combined into a single pixel value), upsampled, filtered, denoised, and the like. Camera images 202 can be in any suitable digital format (JPEG, TIFF, GIG, BMP, CGM, SVG, and so on).

Sensing data acquisition module 210 can further obtain lidar and/or radar images 204, which can include a set of return points (point cloud) corresponding to lidar (radar) beam reflections from various objects in the driving environment. Each return point can be understood as a data unit (pixel) that includes coordinates of reflecting surfaces, radial velocity data, intensity data, and/or the like. For example, sensing data acquisition module 210 can provide lidar/radar images 204 that include the lidar (and/or radar) intensity map $I(R,\theta,\phi)$, where $R$, $\theta$, $\phi$ is a set of spherical coordinates. In some implementations, Cartesian coordinates, elliptic coordinates, parabolic coordinates, or any other suitable coordinates can be used instead. The lidar (radar) intensity map identifies an intensity of the radar (lidar) reflections for various points in the field of view of the radar (lidar). The coordinates of objects that reflect lidar (and/or radar) signals can be determined from directional data (e.g., polar $\theta$ and azimuthal $\phi$ angles in the direction of signal transmissions) and distance data (e.g., radial distance R determined from the time of flight of the signals). Lidar/radar images 204 can further include velocity data of various reflecting objects identified based on detected Doppler shift of the reflected signals.

Camera images 202, lidar/radar images 204 can be large images of the entire driving environment or images of smaller portions of the driving environment (e.g., camera image acquired by a forward-facing camera(s) of the sensing system 110). In some implementations, sensing data acquisition module 210 can crop camera images 202, lidar/radar images 204 corresponding to a certain segment around a direction of motion of the vehicle. For example, since relevant objects of interest are typically located around the direction of travel of the vehicle, sensing data acquisition module 210 can crop camera images 202, lidar/radar images 204 to within a forward-looking segment that is 200-250 m long and 20-40 m wide, in one example non-limiting implementation. The size of the segment can depend on the speed of the vehicle and a type of the driving environment and can be different for a highway driving environment than for an urban driving environment.

Camera images 202, lidar/radar images 204, and, in some implementations, roadgraph information 124, can be used as an input into object detection module 220 that identifies individual objects in the driving environment. Object detection module 220 can be (or include) any suitable computer vision model, e.g., a machine learning model trained to identify regions that include objects of interest, e.g., vehicles, pedestrians, animals, etc. Prediction of motion (behavior) of vehicles and other non-pedestrian objects can be handled by other modules of the perception and planning system 130 (with reference to FIG. 1).

VRUs (or other objects) 230 can be processed by an object-level behavior prediction (BP) 240. An input into object-level BP 240 can include locations (e.g., coordinates) of VRUs/objects 230 and various objects of the environment, e.g., buildings, layout of roadways and sidewalks, and/or the like. In some implementations, input into object-level BP 240 can include velocities of the pedestrians and various other objects, e.g., vehicles, construction crews and equipment, and/or the like. In some implementations, input into object-level BP 240 can include the aforementioned information and/or any other suitable data for a number of times $t_1, t_2, ... t_N$ (timestamps, sensing frames, etc.), which to inform object-level BP 240 about the history of motion of the pedestrians in the context of a changing environment. Object-level BP 240 can predict behavior (motion) of VRUs/objects 230 for a certain future time horizon, e.g., several seconds or more.

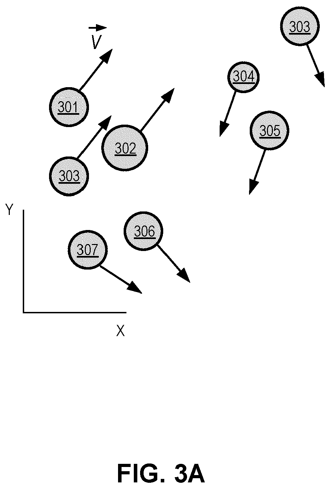

Clustering 250 can group VRUs/objects 230 into clusters whose individual members move in a similar fashion to other members of the same cluster. **FIG. 3A** illustrates identification of individual pedestrians and/or other VRUs as part of prediction of crowd behavior and safe navigation of crowded areas in driving environments, in accordance with some implementations of the present disclosure. Shown schematically in **FIG. 3A** are seven pedestrians 301, 302, ... 307 in a region of an environment of an autonomous vehicle. In some implementations, pedestrians can be identified using coordinates, bounding shapes, classes (e.g., adult, child, pedestrian in a wheelchair, etc.), and/or the like. Although the bounding shapes are shown in **FIG. 3A** as circles, any other suitable geometric shapes (e.g., bounding rectangles, convex hulls, etc.) can be used. **FIG. 3A** illustrates pedestrians 301-307 using a top view (bird's eye view, BEV) in which the pedestrians and/or bounding shapes can be identified using Cartesian in-plane coordinates $X$ and $Y$, but various other coordinates can also be used, e.g., spherical coordinates, coordinates in a perspective (e.g., camera) view of the environment, and/or the like. Identification of individual pedestrians 301-307 can further include a direction faced by a respective pedestrian and velocity $\vec{V}$, which includes a direction of motion (that can be different from the facing direction) and a speed of that motion.

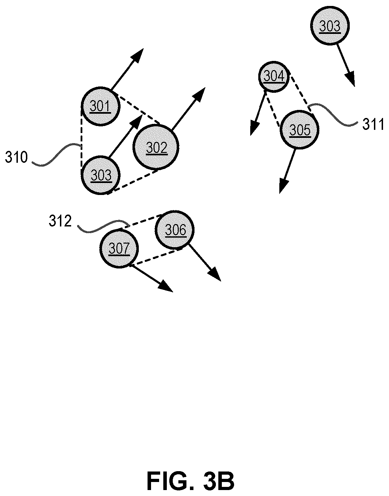

**FIG. 3B** illustrates identification of groups of pedestrians and/or other VRUs having similar motion patterns as part of prediction of crowd behavior and safe navigation of crowded areas in driving environments, in accordance with some implementations of the present disclosure. Such groups of pedestrians can be formed using one or more heuristics. For example, groups of pedestrians can be identified based on (1) distances from a candidate pedestrian to other potential candidate pedestrians (or pedestrians already included in the group), (2) velocities of the candidate pedestrians, (3) expected distances to other candidate pedestrians after a certain set time $\tau$, e.g., 1 second, 1.5 seconds, 2 seconds, etc., and/or other suitable criteria. For example, initial clustering criteria can include a distance from the candidate object to at least one pedestrian already included in the group not exceeding a (first) threshold distance $D_1$. Similarly, another clustering criterion can include the expected (projected, predicted) distance after time $\tau$ to at least one other pedestrian in the group being less than a second threshold distance $D_2$, which can be the same or different from the first threshold distance $D_1$. Yet another clustering criterion can include the velocity (both speed and direction of motion) of the candidate pedestrian being within a certain tolerance range from a centroid velocity of other pedestrians in the group, and/or the like. The tolerance range can be specified in absolute units (e.g., 0.3 m/s, 0.5 m/s or some other value) or in relative units (e.g., 25% of a candidate pedestrian speed or some other value). In some implementations, at least a minimum number (e.g., one, two, etc.) of the criteria described above (and/or any other suitable criteria) may have to be satisfied before a candidate pedestrian is included into a group of other pedestrians. In some implementations, a more flexible approach can be used, e.g., if one or more of the clustering criteria are satisfied, thresholds for the remaining criteria can be lowered. For example, if candidate objects have highly matching velocities, the threshold distance between pedestrians where pedestrians are still grouped together can be increased, and vice versa.

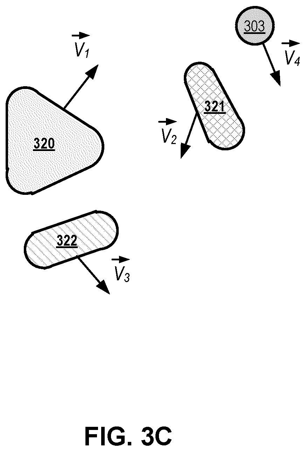

As illustrated schematically in **FIG. 3B,** pedestrians 301-303 can be grouped, based on their spatial proximity and/or similarity of velocities) into a first group 310, pedestrians 304-305 can be grouped into a second group 311, and pedestrians 306-307 can be grouped into a third group 312. Pedestrian 303 (having a different location and/or velocity compared with other groups) can remain in its own single-object group. As further illustrated in **FIG. 3B** with dashed lines, outer boundaries of the respective groups can be joined to form convex hulls or other bounding shapes to form clusters of pedestrians. **FIG. 3C** illustrates formation of clusters based on groups of pedestrians and/or other VRUs having similar motion patterns, in accordance with some implementations of the present disclosure. A convex hull can be any polyline or curve compactly encompassing individual pedestrians in the respective clusters. **FIG. 3C** illustrates three multi-pedestrian clusters 320-322 with pedestrian 303 associated with its own single-pedestrian cluster 323. In some implementations, pedestrians and/or other VRMs of special types can be excluded from grouping with other pedestrians and tracked separately. For example, such special-type VRMs can include children, VRMs using wheelchairs and/or other mobility aids, VRMs guided by service animals, and/or VRMs of other types that are likely to have unexpected (e.g., similar to children) and/or individualized (similar to people in wheelchairs) patterns of motion.

Individual clusters can be assigned representative cluster velocities $\vec{V}_1$, $\vec{V}_2$, $\vec{V}_3$, etc. In some implementations, a representative cluster velocity $\vec{V}_j$ can be a centroid (e.g., average or median) velocity of the pedestrians in the individual cluster. In some implementations, a representative velocity $\vec{V}_j$ can be a velocity of a specific pedestrian in the cluster. The representative pedestrian can be a pedestrian located close to the center of the cluster, a pedestrian whose velocity is the closest to the centroid velocity, and/or the like, or a pedestrian chosen using some other set of conditions (or a weighted combination of conditions).

Additionally, in some implementations, each individual multi-pedestrian cluster can be characterized by a respective spread $\Delta V$ of the velocities of its members. For example, if the minimum speed of a pedestrian in a cluster is 1.2 m/s and the maximum speed of a pedestrian in the same cluster is 1.6 m/s, the spread can be $\Delta V = 0.4$ m/s. A sign of spread $\Delta V$ can track whether the size of the cluster is growing ($\Delta V > 0$) or shrinking ($\Delta V < 0$).

In some implementations, with the continued reference to **FIG. 2,** individual initial clusters can undergo cluster aggregation 260. In some implementations, cluster aggregation 260 can involve combining closely positioned clusters having motion characteristics that do not differ too significantly, into aggregated clusters, e.g., using one or more techniques of hierarchical agglomerative clustering (HAC) or other suitable techniques. More specifically, each cluster can be associated with a point in an *M*-dimensional cluster space where the number of dimensions *M* can correspond to a number of cluster characteristics, e.g., cluster locations, cluster velocities $\vec{V}_j$, types of objects in the clusters, and/or the like. Cluster aggregation 260 can include identifying clusters whose distance (e.g., Euclidean distance) in the M-dimensional cluster space is less than a certain empirically set distance and then combining such clusters into aggregated clusters.

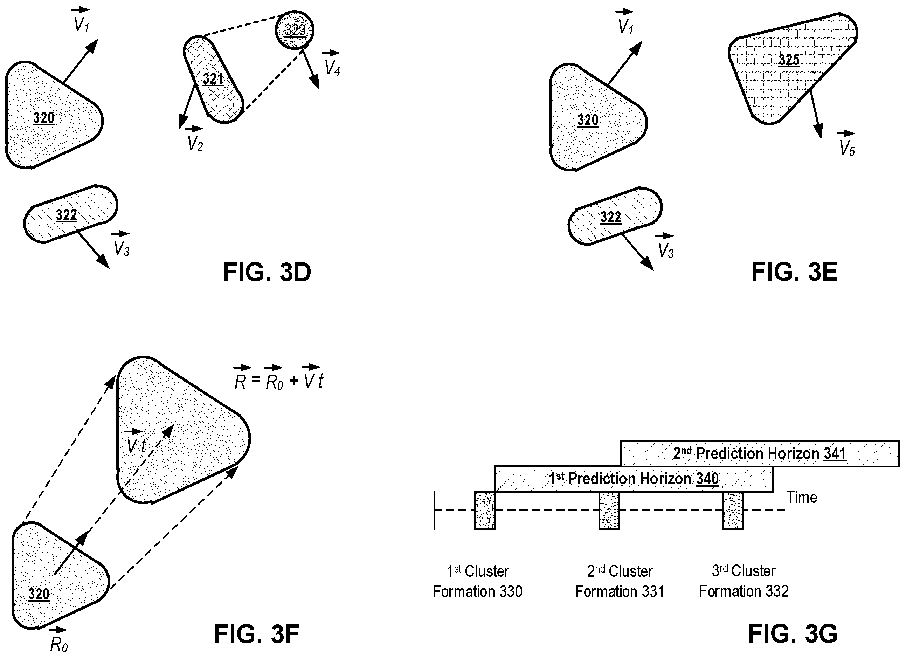

In some implementations, operations of clustering 250 and/or cluster aggregation 260 can be performed by a trained machine learning model, e.g., a neural network-based model. An input into the machine learning model can include any, some, or all of the following: locations of individual VRUs, speed of individual VRUs, direction of motion of individuals VRUs, type of individuals VRUs, and/or the like. The output data generated by the trained machine learning model can include clusters of VRUs, e.g., bounding shapes to enclose the members of the cluster(s), e.g., as illustrated in **FIGs. 3D-3F,** and can further include location and/or velocity of the clusters centroids (and/or other reference points). The machine learning model can be trained using logs of sensing data collected during actual driving missions, e.g., using various vehicle sensors, such as cameras, radars, lidars, ultrasonic sensors, and/or the like. In some implementations, training can be supervised, e.g., using developer-annotated clusters as ground truth. In some implementations, training can be unsupervised. In such instances, identified clusters can be compared with sensing data (logs) for a relatively short time horizon (e.g., one to several seconds) with the motion of individual members of the clusters compared to the tracking predictions made using the model-identified clusters. A score can be assigned to a given cluster predicted by the model, the score being indicative of how well the model-based prediction matches the actual motion of individual VRUs of the cluster. For example, a model-based prediction can receive a high score if all (or most) VRUs included in the cluster move in substantially the same direction (up to some empirically set acceptable tolerance). Conversely, the model-based prediction can receive a low score if some VRUs included in the cluster move in different directions (beyond the set tolerance). The scores can then be used in lieu of the ground truth, with training performed until the model consistently achieves high scores, using various training techniques of backpropagation, stochastic gradient descent, and/or the like.

**FIG. 3D** illustrates identification of individual clusters as part of cluster aggregation for efficient prediction of crowd behavior and safe navigation of crowded areas in driving environments, in accordance with some implementations of the present disclosure. As illustrated, cluster 321 and single-pedestrian cluster 323 can be identified as clusters having close similarity (e.g., computed based on the closeness of the relative locations of the two clusters and the corresponding representative velocities $\vec{V}_2$ and $\vec{V}_4$).

**FIG. 3E** illustrates formation of aggregated clusters based on merging of individual clusters, in accordance with some implementations of the present disclosure. As illustrated, cluster 321 and single-pedestrian cluster 323 are merged into an aggregated cluster 325. The representative velocity $\vec{V}_5$ of the aggregated cluster 325 can be an average or a weighted average of the individual cluster velocities $\vec{V}_2$ and $\vec{V}_4$, e.g., weighted with the number of pedestrians in the respective clusters. For example, in the situation of the two-pedestrian cluster 321 and the single-pedestrian cluster 323, the representative velocity $\vec{V}_5$ can be determined as $\vec{V}_5 = 2\vec{V}_2/3 + \vec{V}_4/3$.

In some implementations, with the continued reference to **FIG. 2,** individual clusters and/or aggregated clusters can be used to perform cluster-level behavior prediction 270. More specifically, motion of each cluster can be predicted using the cluster's initial location $\vec{R}_0$ and the representative velocity $\vec{V}$, such that after time t, the location of the cluster (e.g., a reference point, a centroid point, a representative member of the cluster, etc.) can be estimated as $\vec{R}(t) = \vec{R}_0 + \vec{V}t$. Additionally, the spread $\Delta V$ of the velocities of the cluster can be used to estimate a potential enlargement (or reduction) of the size of the cluster, e.g., with the size of the cluster growing approximately at the rate of $\Delta Vt$. **FIG. 3F** illustrates temporal evolution of an example cluster, in accordance with some implementations of the present disclosure.

Cluster-level behavior prediction 270 can be repeated periodically. **FIG. 3G** illustrates an example timeline of cluster formation and behavior prediction, in accordance with some implementations of the present disclosure. A new cluster formation can be performed at regular time intervals, e.g., first cluster formation 330, second cluster formation 331, third cluster formation 332, and/so on. In some implementations, cluster formation can be repeated when object detection module 220 receives and processes new sensing data, e.g., every 0.3 seconds, every 0.5 seconds, every 1 second, and/or the like. Following the first cluster formation 330 (e.g., as can be performed using operations 220-260, as illustrated in **FIGs. 3A-3E**), cluster-level behavior prediction 270 of **FIG. 2** can generate predictions for a first prediction horizon 340, e.g., 5 seconds, 10 seconds, and/or the like. After object detection module 220 has generated a new set of VRUs/objects 230, a second cluster formation 331 can be performed followed by a new behavior prediction for a second prediction horizon 341, and so on.

The outputs of cluster-level behavior prediction 270 indicate crowd-blocked zones 282 that the autonomous vehicle is to avoid at various times t. For example, planner 280 can determine a driving path 284 for the autonomous vehicle that avoids crossing any clusters and, in some implementations, a certain safety margin (e.g., 1 m, etc.) around the clusters.

VRUs/objects 230 can also be used to perform crowd density mapping 290 to identify reduced-speed zones 286 and determine safe speed of the autonomous vehicles moving through or near regions where crowds of pedestrians are present, in view of the density of pedestrians near the driving path 284. Reduced-speed zones 286 refer to regions where an additional (compared with the legal speed limits) slowdown of the autonomous vehicle is indicated by safety considerations even where legal speed limits do not require such slowdowns.

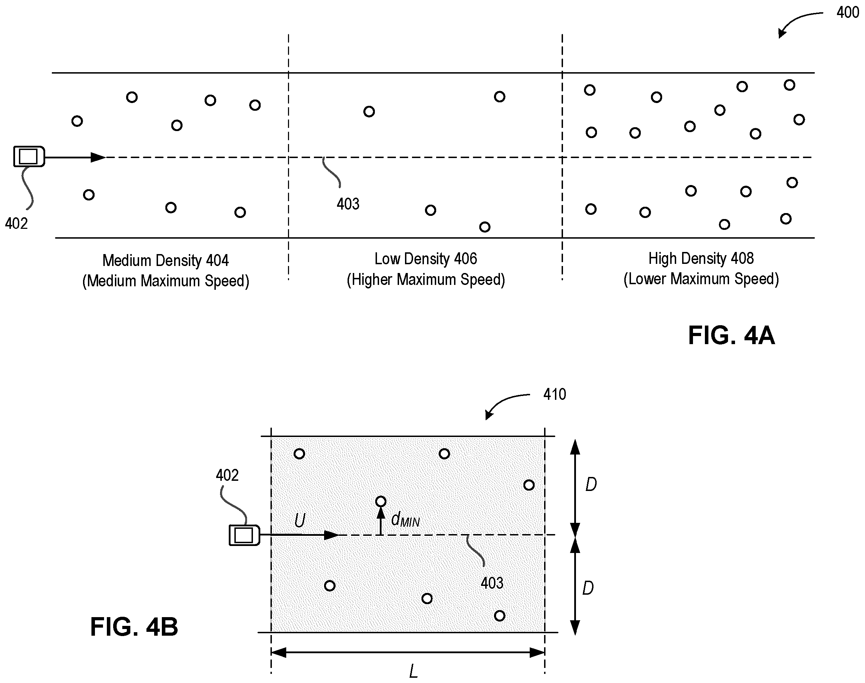

FIG. 4A illustrates schematically a portion 400 of a driving environment that includes regions where multiple pedestrians and/or other VRUs are present, in accordance with some implementations of the present disclosure. Autonomous vehicle 402 can select a speed regime in different regions based on the density of pedestrians (denoted with circles) in those regions. For example, autonomous vehicle 402 can select medium speed in a region of medium density 404, higher speed (e.g., up to a legal speed limit) in a region of medium density 406, lower speed in a region of high density 408, and/or the like. In some implementations, selection of the speed of autonomous vehicle 402 can be informed using one or more suitably chosen functions, e.g., based on a relevance region in the vicinity of the (expected) driving path 403 of the vehicle.

FIG. 4B illustrates schematically one example relevance region 410 that can be used to select a safe speed of motion of an autonomous vehicle when multiple pedestrians and/or other VRUs are present, in accordance with some implementations of the present disclosure. In some implementations, relevance region 410 can have a form of a rectangle of length $L$ along the driving path 403 of autonomous vehicle 402 and width $2D$ in the lateral direction. Length $L$ (e.g., 20-30 m or some other suitable value) and width $2D$ (e.g., 15-20 m or some other suitable value) can be set empirically. In some implementations, length $L$ and/or width $2D$ can be dependent on the speed of autonomous vehicle 402. The crowd density mapping module of the perception system of autonomous vehicle 402 can count the number of detected pedestrians $N_{L \times 2D}$ within the relevance region 410. The safe speed of the autonomous vehicle 402 can be determined based on a distance $d_{MIN}$ from the driving path 403 to the closest pedestrian. The safe speed of the autonomous vehicle 402 can be further determined based on a suitably-defined density $n$ of the pedestrians, e.g., $n = N_{L \times 2D}/L$, in one implementation. The speed of the autonomous vehicle $U$ can be set as a suitable function $f(.)$ of this minimum distance $d_{MIN}$ and the density $n$, e.g., $U = f(d_{MIN}, n)$. The function $f(.)$ can be an increasing function of the minimum distance $d_{MIN}$ and a decreasing function of the density $n$. In some implementations, the function $f(.)$ can be defined as a model function (e.g., continuous function) of its variables $d_{MIN}$ and $n$. In some implementations, the function $f(.)$ can be defined as a set of discrete bins with respect to its variables $d_{MIN}$ and $n$. In some implementations, relevant region 410 can have a non-rectangular form, e.g., be a two-dimensional shape with a width varying along the driving path 403, such that the width is larger in the vicinity of the autonomous vehicle 402 and smaller farther away from the autonomous vehicle 402.

In some implementations, clustering (e.g., clustering 250 in **FIG. 2**) can be used to group other animate objects (not limited to VRUs) into clusters whose individual members move in a similar fashion to other objects in the clusters, including (but not limited to) vehicles traveling on roadways. A planner (e.g., planner 280 in **FIG. 2**) can then predict collective motion of such clusters by treating a cluster as a single entity, e.g., substantially similar to VRU clusters, as disclosed above in conjunction with **FIG. 3F** and **FIG. 3G.**

Clustering of animate objects can be performed using a number of clustering criteria or metrics that can include (but need not be limited to) any, some, or all of the following.

One of the clustering metrics include be a distance $D$ from a candidate object to one or more other objects in the same cluster (a prospective cluster to which the candidate object's belonging is being evaluated). For example, a group of vehicles traveling in the same direction along a roadway can belong to the same cluster provided that distance $D$ between the vehicles is not too large. In one example, a hard cut-off maximum distance $D_{MAX}$ can be used, such that if the distance $D$ between a candidate object and all other objects in the cluster exceeds $D_{MAX}$, the candidate object is excluded from the cluster. In another example, the maximum distance need not be imposed while the distance $D$ to the closest object in the cluster can be evaluated together with other metrics (e.g., to compute a distance in the clustering space, as described below). In some implementations, an object is not assigned to a cluster if the distance from the object to the most distant object in the cluster is above some maximum distance. This can prevent formation of clusters that are too large (e.g., a long line of cars in heavy traffic). The distance measure can favor candidate objects that are proximate to other objects assigned to the cluster and disfavor candidate objects that are more distant from such objects.

Another clustering metric include a velocity of the candidate object or a velocity of the object relative to some reference velocity for the cluster, e.g., mean velocity of objects assigned to the cluster. In those instances where motion of the objects is constrained in one direction (e.g., vehicles on a street of highway), a speed (absolute value or magnitude of the velocity) of the objects can be used in lieu of their velocity. This measure can favor candidate objects that travel with speeds that are similar to the speeds of other objects assigned to the cluster and disfavor candidate objects moving at a different pace than the cluster.

Another clustering metric can include acceleration of the candidate object, e.g., relative to acceleration (e.g., mean acceleration) of other objects assigned to the cluster. Acceleration should be understood to also include deceleration (negative acceleration). This measure can favor candidate objects that change their motion similarly to other objects assigned to the cluster and disfavor candidate objects whose motion changes differently from such objects.

Yet another clustering metric can include a lane match/mismatch between a lane occupied by the candidate object and lanes occupied by other objects. For example, various lanes for a given direction of travel can be numbered, e.g., 1, 2, 3, etc., up to the number of lanes of the roadway. An average lane number *LaneN* can be determined for a cluster, e.g., the average lane number can be *LaneN* =1.0 if all objects of the cluster are traveling in the right lane (lane 1); *LaneN* =1.6 if two objects of the cluster are traveling in the right lane while three objects are traveling in the center lane (lane 2); *LaneN* =2.4 if one object of the cluster is traveling in the right lane, one object is traveling in the center lane, and three objects are traveling in the left lane (lane 3). Lane match/mismatch measure can include a difference between a lane number of the candidate object and the average lane number *LaneN* of the cluster. This measure favors candidate objects that travel in the same lane as other objects assigned to the cluster and disfavors candidate objects traveling in other lanes.

Other clustering metrics can include a type of an object, a mismatch in lane destination, and/or the like. For example, a truck can be favored to cluster together with other trucks but disfavored to cluster with cars, motorcycles, or buses. Similarly, a vehicle traveling in the forward-direction lane can be disfavored to be included into a cluster of vehicles traveling in the left-turn lane.

In one example implementation, values $M_1 ... M_n$ indicative of a degree of mismatch between various metrics for candidate objects and respective metrics for the cluster (e.g., cluster centroids) can be considered as distances along the corresponding dimensions of the clustering space whose dimensionality $n$ is determined by the number of metrics. A clustering measure (distance in the clustering space) can be computed as

$$ S = \sum_{j=1}^{n} w_j \cdot M_j^2, $$

where $w_j$ are weights, e.g., empirically selected based on field testing, that assign different relative influences to different metrics. A candidate object can be included in a cluster provided that the clustering measure is less than a certain maximum value, less than measures for inclusion into other clusters, and/or some other suitable heuristics.

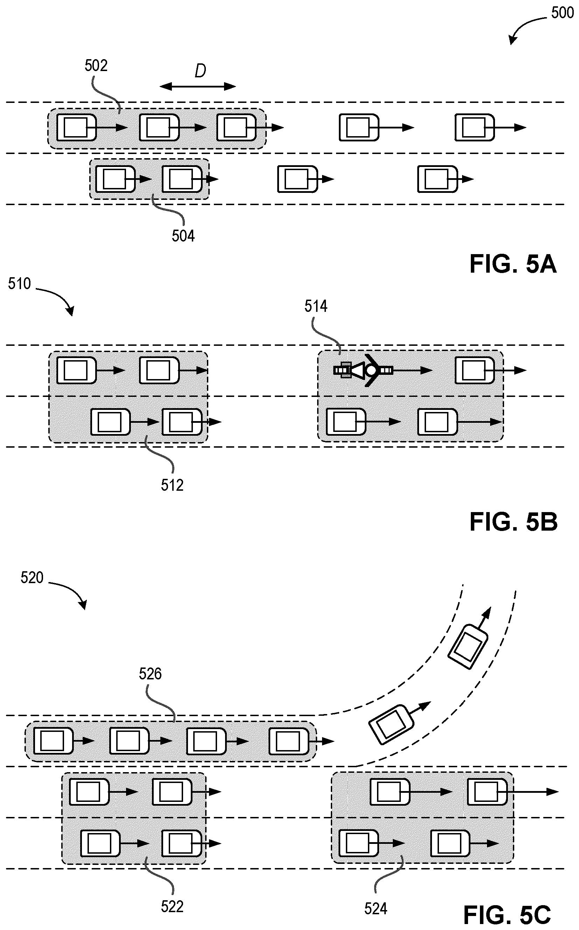

**FIGs. 5A-5C** illustrate example clusters of non-VRU objects traveling on a highway or a city street, in accordance with some implementations of the present disclosure.

**FIG. 5A** illustrates an example stretch of a two-lane roadway 500 occupied by nine vehicles. Arrows show the direction of travel of the vehicles with the length of the arrows indicating schematically the speed of the vehicles. **FIG. 5A** depicts two clusters, each confined to its own lane: a cluster 502 of vehicles traveling in the left lane and a cluster 504 of vehicles traveling in the right lane. Even though all five vehicles are closely positioned, lower speeds of the vehicles of cluster 504 can preclude combining cluster 504 with cluster 502. Other vehicles depicted in **FIG. 5A** have speeds that are substantially different from speeds of other vehicles traveling nearby and, therefore, are not joined with clusters 502 or 504 (equivalently, those vehicles can be treated as single-object clusters).

**FIG. 5B** illustrates another example stretch of a two-lane roadway 510 occupied by eight vehicles. **FIG. 5B** depicts two multi-lane clusters: a cluster 512 of slow-moving vehicles and a cluster 514 of fast-moving vehicles. **FIG. 5C** illustrates an example stretch of a three-lane roadway 520 that includes two lanes of travel in the forward direction and a left-turn lane. **FIG. 5C** depicts two multi-lane clusters: a cluster 522 of slow forward-moving vehicles and a cluster 524 of fast forward-moving vehicles. Additionally, **FIG. 5C** depicts a cluster 526 of vehicles preparing to make a left turn. Even though vehicles of cluster 526 can be traveling with the same (or similar speeds) and located close to vehicles of cluster 522, the two clusters are not joined together because of the metric that disfavors mismatches in lane destinations.

In some implementations, a method of using object (including non-VRU) clustering can include obtaining, using a sensing system of a vehicle, sensing data associated with a driving environment of the vehicle. The method can further include detecting, using a processing device and based on the sensing data, a plurality of objects in the driving environment. The method can further include applying one or more clustering criteria (metrics) to the plurality of objects in the driving environment to form one or more clusters of objects. Individual clustering metrics can include a distance between an individual object to a reference point location of the respective cluster (e.g., centroid location) or one or more objects of the respective cluster. Individual clustering metrics can further include a speed of the respective object, e.g., relative to a reference speed (e.g., centroid speed) or speed of one or more objects of the respective cluster. Individual clustering metrics can further include an acceleration of the respective object, e.g., relative to a reference acceleration (e.g., centroid acceleration) or acceleration of one or more objects of the respective cluster. Individual clustering metrics can further include a lane occupied by the respective object, e.g., relative to a lane occupied by one or more objects of the respective cluster. Individual clustering metrics can further include a destination of a lane occupied by the respective object, e.g., relative to destination(s) of lane(s) occupied by one or more objects of the respective cluster. Individual clustering metrics can further include a type of the respective object (e.g., car, truck, bus, motorcycle, scooter, and/or the like), e.g., relative to type(s) of one or more objects of the respective cluster. In some implementations, applying the one or more clustering criteria (metrics) to the plurality of objects can include evaluating Euclidean distance in a multi-dimensional metrics space between points representing a candidate object and a reference point (e.g., centroid) of the respective cluster and/or one or more objects already assigned into the respective cluster of objects. The method can further include predicting motion of the one or more formed clusters, e.g., based on the size of the cluster, position of the centroid of the cluster, velocity of the centroid of the cluster, a spread (e.g., variance) of positions/velocities of the cluster, and/or other characteristics of the clusters, and/or the like, for a time interval. The method can further include determining, in view of the predicted motion of the clusters, a driving path of the vehicle in the driving environment. For example, the vehicle can avoid entering space occupied by a cluster and select the driving path that avoids the cluster, e.g., by traveling in lanes not occupied by the cluster or by waiting until the cluster has moved away from the vehicle.

In some implementations, the method can include forming a plurality of initial clusters of objects and then using HAC to aggregate multiple initial clusters of the objects into bigger clusters (e.g., as disclosed above in conjunction with VRUs).

In some implementations, applying the one or more clustering metrics to the plurality of objects can include using a trained machine learning model to process an input data that includes locations of the objects (including lanes occupied by the objects), a roadgraph information (e.g., map of lanes of the roadway), speed of the objects, direction of motion of the objects, and/or the like. The machine learning model can be trained, e.g., as disclosed above in conjunction with VRUs).

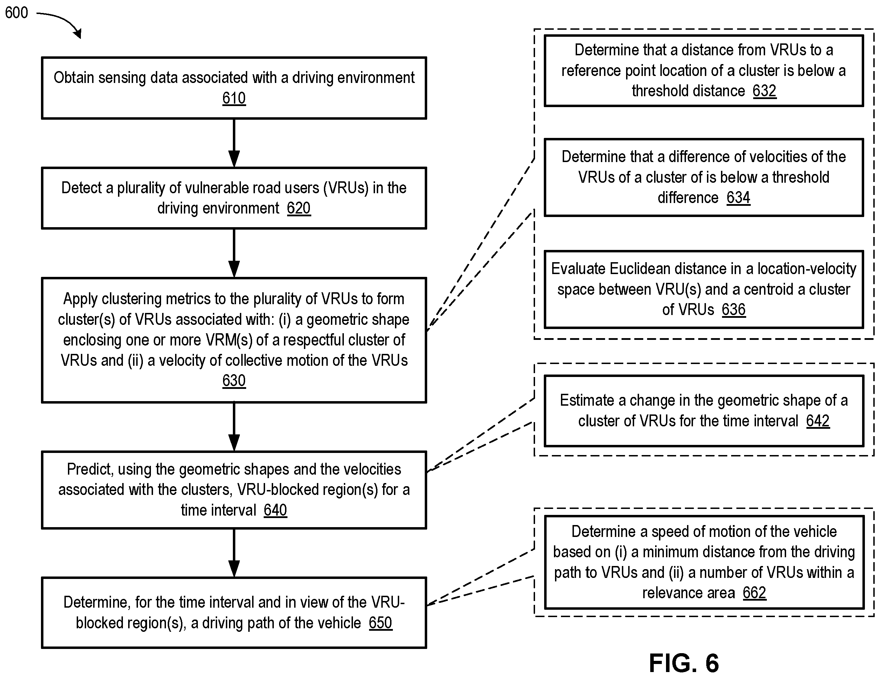

FIG. 6 illustrates an example method 600 of predicting crowd behavior and safely navigating crowded areas in driving environments, in accordance with some implementations of the present disclosure. A processing device, having one or more processing units (CPUs), one or more graphics processing units (GPUs), one or more parallel processing units (PPUs) and memory devices communicatively coupled to the CPU(s), GPU(s), and/or PPU(s) can perform method 600 and/or each of its individual functions, routines, subroutines, or operations. Method 600 can be implemented with systems and components of a vehicle. In some implementations, the vehicle can be an autonomous vehicle. In some implementations, the vehicle can be a driver-operated vehicle equipped with driver-assistance systems, e.g., Level 2 or Level 3 driver assistance systems, that provide limited assistance with specific vehicle systems (e.g., steering, braking, acceleration, etc. systems) or under limited driving conditions (e.g., highway driving). The processing device (e.g., processor 128 in FIG. 1) executing method 600 can perform instructions issued by the perception and planning system 130 of FIG. 1 and, more specifically, of crowd analyzer 132, during driving operations of the vehicle. Operations of method 600 can be performed responsive to instructions stored in non-transient computer-readable memory (e.g., system memory 126 in FIG. 1). In certain implementations, a single processing thread can perform method 600. Alternatively, two or more processing threads can perform method 600, each thread executing one or more individual functions, routines, subroutines, or operations of the method. In an illustrative example, the processing threads implementing method 600 can be synchronized (e.g., using semaphores, critical sections, and/or other thread synchronization mechanisms). Alternatively, the processing threads implementing method 600 can be executed asynchronously with respect to each other. Some operations of method 600 can be performed in a different order compared with the order shown in FIG. 6. Some operations of method 600 can be performed concurrently with other operations. Some operations can be optional.

At block 610, method 600 can include obtaining, using a sensing system of a vehicle, sensing data (e.g., camera images 202, lidar and/or radar images 204, with reference to FIG. 2) associated with a driving environment. At block 620, method 600 can include detecting, using a processing device (e.g., processor 128 in FIG. 1) and based on the sensing data, a plurality of vulnerable road users (VRUs) in the driving environment (e.g., VRUs/objects 230 in FIG. 2). In some implementations, detecting VRUs can be performed using object detection module 220 (shown in FIG. 2). VRUs can include (but need not be limited to) pedestrians, bicyclists, scooter riders, persons in a wheelchair, animals, horse/mule riders, and/or any other road/sidewalk users capable of moving collectively in groups of two or more entities.

At block 630, method 600 can continue with applying one or more clustering metrics to the plurality of VRUs in the driving environment to form one or more clusters of VRUs (e.g., as illustrated in FIGs. 3A-3E). Each of the one or more clusters of VRUs can be associated (e.g., as illustrated in FIGs. 3A-3C) with a geometric shape enclosing one or more VRUs of a respective cluster of VRUs and a velocity associated with a collective motion of the one or more VRUs of the respective cluster of VRUs. In some implementations, the geometric shape can be a rectangle, a square, a circle, an oval, a parallelepiped, and/or any other suitable geometric figure. In some implementations, the velocity associated with the collective motion of the one or more VRUs of the respective cluster can be computed as an average velocity of the one or more VRUs of the respective cluster. In some implementations, the velocity associated with the collective motion of the one or more VRUs can be a weighted average velocity with the velocities of individual VRUs near a center of a cluster given more weight than velocities of VRU near edges of the cluster. In some implementations, the velocity associated with the collective motion of the one or more VRUs can be a one-dimensional velocity, which can be determined along the direction of a roadway (sidewalk, road crossing, etc.). In some implementations, the velocity associated with the collective motion of the one or more VRUs can be a multi-dimensional velocity, with components along multiple spatial directions (e.g., along a roadway/sidewalk/crossing/etc. and perpendicular to it).

In some implementations, applying the one or more clustering metrics to the plurality of VRUs can include operations illustrated with the top callout portion of FIG. 6. More specifically, at block 632, method 600 can include determining that a distance from each of the one or more VRUs to a reference point location of the respective cluster of VRUs is below a threshold distance. For example, the reference point can be a centroid point of the cluster or a representative member of the cluster. The centroid point (or other reference point) need not be static and can change as one or more VRUs are added to (or removed from) a given cluster. In some implementations, the threshold distance can be a fixed empirical distance (e.g., measured in meters). In other implementations, the threshold distance can be defined relative to a size of the cluster, e.g., including a certain percentage of the longest, shortest, average, etc., dimension(s) of the cluster. In some implementations, the threshold distance can be defined in relation to a maximum size of the cluster, e.g., a cluster exceeding the maximum distance can be split into two or more smaller clusters (e.g., to improve predictability of the cluster's future behavior).

In some implementations, operations of applying the clustering metrics can include, at block 634, determining that a difference of velocities of the one or more VRUs of the respective cluster of VRUs is below a threshold difference. In some implementations, the threshold difference can be a fixed empirical value (e.g., measured in meters per second, e.g., 1 m/s, 0.5 m/s, etc.). In other implementations, the threshold difference can be defined relative to the average velocity of the cluster (e.g., 20%, 15%, etc. of the cluster velocity).

In some implementations, applying the clustering metrics to the plurality of VRUs can include, at block 636, evaluating a Euclidean distance in a location-velocity space between each of the one or more VRUs of the respective cluster of VRUs and a centroid of the respective cluster of VRUs. For example, the location-velocity space can include any, some, or all $x$-coordinate, $y$-coordinate, $v_x$ velocity, $v_y$ velocity, such that a vector $(x, y, v_x, v_y)$ for a given VRU characterizes a state of motion of that VRU. The centroid of a particular cluster can be associated with a similar vector $(X, Y, V_X, V_Y)$, where $X, Y$ are coordinates of the centroid and $V_X, V_Y$ are the velocities of the centroid. The Euclidean distance can be computed as

$$ D = a(x - X)^2 + b(y - Y)^2 + c(v_x - V_X)^2 + d(v_y - V_Y)^2, $$

e.g., with suitably (e.g., empirically) chosen weight parameters $a, b, c, d$.

In some implementations, operations of block 630 can further include forming a plurality of initial clusters of VRUs and using hierarchical agglomerative clustering (HAC) to aggregate at least two initial clusters of the plurality of initial clusters of VRUs (e.g., as illustrated in **FIGs. 3D-3E**).

In some implementations, operations of block 630 can include processing an input data by a trained machine learning model to obtain an output data. The input data can include (i) locations of the plurality of VRUs, (ii) speed of the plurality of VRUs, and (iii) direction of motion of the plurality of VRUs, and/or the like. The output data can include the one or more clusters of VRUs.

In some implementations, method 600 can continue, at block 640, with predicting, using the geometric shapes and the velocities associated with the one or more clusters of VRUs, one or more VRU-blocked regions for a time interval (e.g., 2 s, 3 s, 5 s, and/or the like). For example, knowledge of the coordinates $(X, Y)$ and velocities $(V_X, V_Y)$ of the cluster (e.g., a centroid of the cluster) at a current instance of time can be used to predict location of the cluster (e.g., centroid) at a later time $t$.

In some implementations, each of the one or more clusters of VRUs is further associated with a spread of velocities of one or more VRUs of the respective cluster of VRUs, and wherein predicting the one or more VRU-blocked regions for the time interval $X(t) = X + V_X t; Y(t) = Y + Y_X t$. In some implementations, predicting the one or more VRU-blocked regions can include operations of the middle callout block 642, including estimating a change in the geometric shape of the respective cluster of VRUs for the time interval. For example, a spread of the velocities can be used to estimate an increase (or decrease) in the area occupied by the cluster (e.g., as illustrated in **FIG. 3F**).

At block 650, method 600 can include determining, for the time interval and in view of the one or more VRU-blocked regions, a driving path of the vehicle in the driving environment. For example, the processing system of the vehicle can predict areas occupied by various formed clusters at different moments of time within the time interval and avoid these areas. In some implementations, determining the driving path of the vehicle can include operations of the bottom callout block 652, including determining a speed of motion for the driving path of the vehicle based on a minimum distance from the driving path to a VRU of the plurality of VRUs or a number of VRUs within a relevance area around the driving path of the vehicle (e.g., as illustrated in **FIG. 4**). In some implementations, the speed of motion for the driving path of the vehicle can be a decreasing function of the number of VRUs within the relevance area, e.g., as the number of VRUs within the relevance area increases (decreases), the maximum speed of the vehicle (which is different, e.g., lower, than the legal speed limit) can be decreased (increased).

In some implementations, e.g., in autonomous vehicles, the determined driving path of the vehicle can be implemented by the vehicle control system of the autonomous vehicle (e.g., VCS 140 in **FIG. 1**). In some implementations, e.g., in driver-operated vehicles, the determined driving path of the vehicle can be implemented by a driver following a driver-assist system outputting a suggestion of the driving path to the driver.

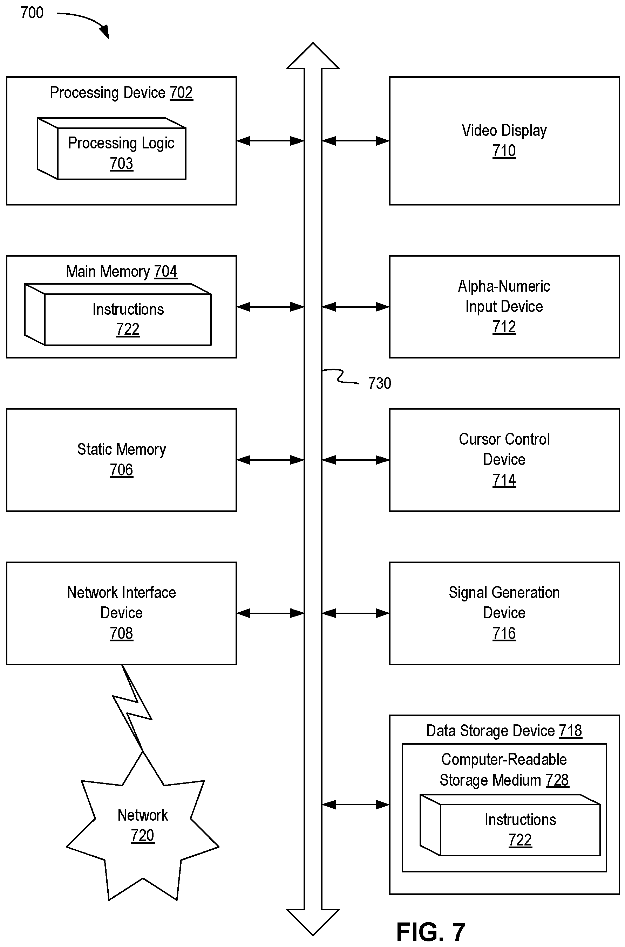

**FIG. 7** depicts a block diagram of an example computer device 700 capable of deploying a crowd analyzer to predict crowd behavior and safely navigate crowded areas in driving environments, in accordance with some implementations of the present disclosure. Example computing device 700 can be a computing device implementing data processing system 120 in **FIG. 1.** Example computer device 700 can be connected to other computer devices in a LAN, an intranet, an extranet, and/or the Internet. Computer device 700 can operate in the capacity of a server in a client-server network environment. Computer device 700 can be a personal computer (PC), a set-top box (STB), a server, a network router, switch or bridge, or any device capable of executing a set of instructions (sequential or otherwise) that specify actions to be taken by that device. Further, while only a single example computer device is illustrated, the term "computer" shall also be taken to include any collection of computers that individually or jointly execute a set (or multiple sets) of instructions to perform any one or more of the methods discussed herein.

Example computer device 700 can include a processing device 702 (also referred to as a processor or CPU), a main memory 704 (e.g., read-only memory (ROM), flash memory, dynamic random access memory (DRAM) such as synchronous DRAM (SDRAM), etc.), a static memory 706 (e.g., flash memory, static random access memory (SRAM), etc.), and a secondary memory (e.g., a data storage device 718), which can communicate with each other via a bus 730. In some implementations, processing device 702 can be or include processor 128 of **FIG. 1** and main memory 704 can be or include system memory 126 in **FIG. 1.**

Processing device 702 (which can include processing logic 703) represents one or more general-purpose processing devices such as a microprocessor, central processing unit, or the like. More particularly, processing device 702 can be a complex instruction set computing (CISC) microprocessor, reduced instruction set computing (RISC) microprocessor, very long instruction word (VLIW) microprocessor, processor implementing other instruction sets, or processors implementing a combination of instruction sets. Processing device 702 can also be one or more special-purpose processing devices such as an application specific integrated circuit (ASIC), a field programmable gate array (FPGA), a digital signal processor (DSP), network processor, or the like. In accordance with one or more aspects of the present disclosure, processing device 702 can be configured to execute instructions performing various methods of predicting crowd behavior and safely navigating crowded areas in driving environments, as disclosed herein.

Example computer device 700 can further include a network interface device 708, which can be communicatively coupled to a network 720. Example computer device 700 can further include a video display 710 (e.g., a liquid crystal display (LCD), a touch screen, or a cathode ray tube (CRT)), an alphanumeric input device 712 (e.g., a keyboard), a cursor control device 714 (e.g., a mouse), and an acoustic signal generation device 716 (e.g., a speaker).

Data storage device 718 can include a computer-readable storage medium (or, more specifically, a non-transitory computer-readable storage medium) 728 on which is stored one or more sets of executable instructions 722. In accordance with one or more aspects of the present disclosure, executable instructions 722 can include executable instructions performing various methods of predicting crowd behavior and safely navigating crowded areas in driving environments, as disclosed herein.

Executable instructions 722 can also reside, completely or at least partially, within main memory 704 and/or within processing device 702 during execution thereof by example computer device 700, main memory 704 and processing device 702 also constituting computer-readable storage media. Executable instructions 722 can further be transmitted or received over a network via network interface device 708.

While the computer-readable storage medium 728 is shown in **FIG. 7** as a single medium, the term "computer-readable storage medium" should be taken to include a single medium or multiple media (e.g., a centralized or distributed database, and/or associated caches and servers) that store the one or more sets of operating instructions. The term "computer-readable storage medium" shall also be taken to include any medium that is capable of storing or encoding a set of instructions for execution by the machine that cause the machine to perform any one or more of the methods described herein. The term "computer-readable storage medium" shall accordingly be taken to include, but not be limited to, solid-state memories, and optical and magnetic media.

Some portions of the detailed descriptions above are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise, as apparent from the following discussion, it is appreciated that throughout the description, discussions utilizing terms such as "identifying," "determining," "storing," "adjusting," "causing," "returning," "comparing," "creating," "stopping," "loading," "copying," "throwing," "replacing," "performing," or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Examples of the present disclosure also relate to an apparatus for performing the methods described herein. This apparatus can be specially constructed for the required purposes, or it can be a general purpose computer system selectively programmed by a computer program stored in the computer system. Such a computer program can be stored in a computer readable storage medium, such as, but not limited to, any type of disk including optical disks, CD-ROMs, and magnetic-optical disks, read-only memories (ROMs), random access memories (RAMs), EPROMs, EEPROMs, magnetic disk storage media, optical storage media, flash memory devices, other type of machine-accessible storage media, or any type of media suitable for storing electronic instructions, each coupled to a computer system bus.

The methods and displays presented herein are not inherently related to any particular computer or other apparatus. Various general purpose systems can be used with programs in accordance with the teachings herein, or it may prove convenient to construct a more specialized apparatus to perform the required method steps. The required structure for a variety of these systems will appear as set forth in the description below. In addition, the scope of the present disclosure is not limited to any particular programming language. It will be appreciated that a variety of programming languages can be used to implement the teachings of the present disclosure.

It is to be understood that the above description is intended to be illustrative, and not restrictive. Many other implementation examples will be apparent to those of skill in the art upon reading and understanding the above description. Although the present disclosure describes specific examples, it will be recognized that the systems and methods of the present disclosure are not limited to the examples described herein, but can be practiced with modifications within the scope of the appended claims. Accordingly, the specification and drawings are to be regarded in an illustrative sense rather than a restrictive sense. The scope of the present disclosure should, therefore, be determined with reference to the appended claims, along with the full scope of equivalents to which such claims are entitled.

The specification includes the following subject-matter, expressed in the form of clauses 1-22:

1. A system comprising:

a sensing system of a vehicle, the sensing system configured to obtain sensing data associated with a driving environment;
a data processing system of the vehicle, the data processing system configured to:

apply one or more clustering metrics to a plurality of vulnerable road users (VRUs) in the driving environment to form one or more clusters of VRUs, each of the one or more clusters of VRUs associated with:

a geometric shape enclosing one or more VRUs of a respective cluster of VRUs, and
a velocity associated with a collective motion of the one or more VRUs of the respective cluster of VRUs;

predict, using the geometric shapes and the velocities associated with the one or more clusters of VRUs, one or more VRU-blocked regions for a time interval; and
determine, for the time interval and in view of the one or more VRU-blocked regions, a driving path of the vehicle in the driving environment.

2. The system of clause 1, wherein to apply the one or more clustering metrics to the one or more VRUs of the respective cluster of VRUs, the data processing system is to determine at least one of:

that a distance from each of the one or more VRUs to a reference point location of the respective cluster of VRUs is below a threshold distance; or
that a difference of velocities of the one or more VRUs of the respective cluster of VRUs is below a threshold difference.

3. The system of clause 1 or clause 2, wherein to apply the one or more clustering metrics to the plurality of VRUs, the data processing system is to:
evaluate a Euclidean distance in a location-velocity space between each of the one or more VRUs of the respective cluster of VRUs and a centroid of the respective cluster of VRUs.
4. The system of any of clauses 1-3, wherein to apply the one or more clustering metrics to the plurality of VRUs, the data processing system is to perform at least one of:

applying hierarchical agglomerative clustering (HAC) to a plurality of initial clusters of VRUs to aggregate at least two initial clusters to obtain the one or more clusters of VRUs; or
processing an input data by a trained machine learning model to obtain an output data, wherein the input data

**EP 4 704 065 A1**

comprises (i) locations of the plurality of VRUs, (ii) speed of the plurality of VRUs, and (iii) direction of motion of the plurality of VRUs, and wherein the output data comprises the one or more clusters of VRUs.

5. The system of any of clauses 1-4, wherein the velocity associated with the collective motion of the one or more VRUs of the respective cluster comprises an average velocity of the one or more VRUs of the respective cluster.

6. The system of any of clauses 1-5, wherein each of the one or more clusters of VRUs is further associated with a spread of velocities of one or more VRUs of the respective cluster of VRUs, and wherein to predict the one or more VRU-blocked regions for the time interval, the data processing system is to:

estimate a change in the geometric shape of the respective cluster of VRUs for the time interval.

7. The system of any of clauses 1-6, wherein to determine the driving path of the vehicle, the data processing system is further configured to:
determine a speed of motion for the driving path of the vehicle based at least on:

a minimum distance from the driving path to a VRU of the plurality of VRUs, or
a number of VRUs within a relevance area around the driving path of the vehicle.

8. The system of clause 7, wherein the speed of motion for the driving path of the vehicle decreases with increasing the number of VRUs within the relevance area.
9. A method comprising:

obtaining, using a sensing system of a vehicle, sensing data associated with a driving environment;
detecting, using a processing device and based on the sensing data, a plurality of vulnerable road users (VRUs) in the driving environment;
applying one or more clustering metrics to the plurality of VRUs in the driving environment to form one or more clusters of VRUs, each of the one or more clusters of VRUs associated with:

a geometric shape enclosing one or more VRUs of a respective cluster of VRUs, and
a velocity associated with a collective motion of the one or more VRUs of the respective cluster of VRUs;

predicting, using the geometric shapes and the velocities associated with the one or more clusters of VRUs, one or more VRU-blocked regions for a time interval; and
determining, for the time interval and in view of the one or more VRU-blocked regions, a driving path of the vehicle in the driving environment.

10. The method of clause 9, wherein applying the one or more clustering metrics to the plurality of VRUs comprises at least one of:

determining that a distance from each of the one or more VRUs to a reference point location of the respective cluster of VRUs is below a threshold distance; or
determining that a difference of velocities of the one or more VRUs of the respective cluster of VRUs is below a threshold difference.

11. The method of clause 9 or clause 10, wherein applying the one or more clustering metrics to the plurality of VRUs comprises:
evaluating a Euclidean distance in a location-velocity space between each of the one or more VRUs of the respective cluster of VRUs and a centroid of the respective cluster of VRUs.
12. The method of any of clauses 9-11, wherein applying the one or more clustering metrics to the plurality of VRUs comprises at least one of:

applying hierarchical agglomerative clustering (HAC) to a plurality of initial clusters of VRUs to aggregate at least two initial clusters to obtain the one or more clusters of VRUs; or
processing an input data by a trained machine learning model to obtain an output data, wherein the input data comprises (i) locations of the plurality of VRUs, (ii) speed of the plurality of VRUs, and (iii) direction of motion of the plurality of VRUs, and wherein the output data comprises the one or more clusters of VRUs.

13. The method of any of clauses 9-12, wherein the velocity associated with the collective motion of the one or more

17

VRUs of the respective cluster comprises an average velocity of the one or more VRUs of the respective cluster.

14. The method of any of clauses 9-13, wherein each of the one or more clusters of VRUs is further associated with a spread of velocities of one or more VRUs of the respective cluster of VRUs, and wherein predicting the one or more VRU-blocked regions for the time interval comprises:

estimating a change in the geometric shape of the respective cluster of VRUs for the time interval.

15. The method of any of clauses 9-14, wherein determining the driving path of the vehicle comprises:

determining a speed of motion for the driving path of the vehicle based at least on:

a minimum distance from the driving path to a VRU of the plurality of VRUs, or
a number of VRUs within a relevance area around the driving path of the vehicle.

16. The method of clause 15, wherein the speed of motion for the driving path of the vehicle decreases with increasing the number of VRUs within the relevance area.

17. An autonomous vehicle comprising:

a sensing system configured to obtain sensing data associated with a driving environment;
a data processing system configured to:

apply one or more clustering metrics to a plurality of vulnerable road users (VRUs) in the driving environment to form one or more clusters of VRUs, each of the one or more clusters of VRUs associated with:

a geometric shape enclosing one or more VRUs of a respective cluster of VRUs, and
a velocity associated with a collective motion of the one or more VRUs of the respective cluster of VRUs;

predict, using the geometric shapes and the velocities associated with the one or more clusters of VRUs, one or more VRU-blocked regions for a time interval; and
determine, for the time interval and in view of the one or more VRU-blocked regions, a driving path of the vehicle in the driving environment; and

a vehicle control system configured to:
direct the autonomous vehicle on the determined driving path.

18. The autonomous vehicle of clause 17, wherein to apply the one or more clustering metrics to the one or more VRUs of the respective cluster of VRUs, the data processing system is to determine at least one of:

that a distance from each of the one or more VRUs to a reference point location of the respective cluster of VRUs is below a threshold distance; or
that a difference of velocities of the one or more VRUs of the respective cluster of VRUs is below a threshold difference.

19. The autonomous vehicle of clause 17 or clause 18, wherein to apply the one or more clustering metrics to the plurality of VRUs, the data processing system is to:
evaluate a Euclidean distance in a location-velocity space between each of the one or more VRUs of the respective cluster of VRUs and a centroid of the respective cluster of VRUs.

20. The autonomous vehicle of any of clauses 17-19, wherein the data processing system is further configured to:
determine a speed of motion for the driving path of the vehicle based at least on:

a minimum distance from the driving path to a VRU of the plurality of VRUs, or
a number of VRUs within a relevance area around the driving path of the vehicle.

21. A computer program product comprising instructions which, when executed by one or more processors, cause the processors to perform the method of any of clauses 9-16.

22. Computer-executable instructions which, when executed by one or more processors, cause the processors to perform the method of any of clauses 9-16.

**Claims**

1. A system comprising:

   a sensing system of a vehicle, the sensing system configured to obtain sensing data associated with a driving environment;
   a data processing system of the vehicle, the data processing system configured to:

   apply one or more clustering metrics to a plurality of vulnerable road users (VRUs) in the driving environment to form one or more clusters of VRUs, each of the one or more clusters of VRUs associated with:

   a geometric shape enclosing one or more VRUs of a respective cluster of VRUs, and
   a velocity associated with a collective motion of the one or more VRUs of the respective cluster of VRUs;

   predict, using the geometric shapes and the velocities associated with the one or more clusters of VRUs, one or more VRU-blocked regions for a time interval; and
   determine, for the time interval and in view of the one or more VRU-blocked regions, a driving path of the vehicle in the driving environment.

2. The system of claim 1, wherein to apply the one or more clustering metrics to the one or more VRUs of the respective cluster of VRUs, the data processing system is to determine at least one of:

   that a distance from each of the one or more VRUs to a reference point location of the respective cluster of VRUs is below a threshold distance; or
   that a difference of velocities of the one or more VRUs of the respective cluster of VRUs is below a threshold difference; and/or
   wherein to apply the one or more clustering metrics to the plurality of VRUs, the data processing system is to:

   evaluate a Euclidean distance in a location-velocity space between each of the one or more VRUs of the respective cluster of VRUs and a centroid of the respective cluster of VRUs; and/or
   wherein to apply the one or more clustering metrics to the plurality of VRUs, the data processing system is to perform at least one of:

   applying hierarchical agglomerative clustering (HAC) to a plurality of initial clusters of VRUs to aggregate at least two initial clusters to obtain the one or more clusters of VRUs; or
   processing an input data by a trained machine learning model to obtain an output data, wherein the input data comprises (i) locations of the plurality of VRUs, (ii) speed of the plurality of VRUs, and (iii) direction of motion of the plurality of VRUs, and wherein the output data comprises the one or more clusters of VRUs.

3. The system of claim 1 or claim 2, wherein the velocity associated with the collective motion of the one or more VRUs of the respective cluster comprises an average velocity of the one or more VRUs of the respective cluster.

4. The system of any of claims 1-3, wherein each of the one or more clusters of VRUs is further associated with a spread of velocities of one or more VRUs of the respective cluster of VRUs, and wherein to predict the one or more VRU-blocked regions for the time interval, the data processing system is to:
   estimate a change in the geometric shape of the respective cluster of VRUs for the time interval.

5. The system of any of claims 1-4, wherein to determine the driving path of the vehicle, the data processing system is further configured to:
   determine a speed of motion for the driving path of the vehicle based at least on:

   a minimum distance from the driving path to a VRU of the plurality of VRUs, or
   a number of VRUs within a relevance area around the driving path of the vehicle.

6. The system of claim 5, wherein the speed of motion for the driving path of the vehicle decreases with increasing the number of VRUs within the relevance area.

7. A method comprising:

obtaining, using a sensing system of a vehicle, sensing data associated with a driving environment;

detecting, using a processing device and based on the sensing data, a plurality of vulnerable road users (VRUs) in the driving environment;

applying one or more clustering metrics to the plurality of VRUs in the driving environment to form one or more clusters of VRUs, each of the one or more clusters of VRUs associated with:

a geometric shape enclosing one or more VRUs of a respective cluster of VRUs, and

a velocity associated with a collective motion of the one or more VRUs of the respective cluster of VRUs;

predicting, using the geometric shapes and the velocities associated with the one or more clusters of VRUs, one or more VRU-blocked regions for a time interval; and

determining, for the time interval and in view of the one or more VRU-blocked regions, a driving path of the vehicle in the driving environment.

8. The method of claim 7, wherein applying the one or more clustering metrics to the plurality of VRUs comprises at least one of:

determining that a distance from each of the one or more VRUs to a reference point location of the respective cluster of VRUs is below a threshold distance; or

determining that a difference of velocities of the one or more VRUs of the respective cluster of VRUs is below a threshold difference; and/or

wherein applying the one or more clustering metrics to the plurality of VRUs comprises:

evaluating a Euclidean distance in a location-velocity space between each of the one or more VRUs of the respective cluster of VRUs and a centroid of the respective cluster of VRUs; and/or

wherein applying the one or more clustering metrics to the plurality of VRUs comprises at least one of:

applying hierarchical agglomerative clustering (HAC) to a plurality of initial clusters of VRUs to aggregate at least two initial clusters to obtain the one or more clusters of VRUs; or

processing an input data by a trained machine learning model to obtain an output data, wherein the input data comprises (i) locations of the plurality of VRUs, (ii) speed of the plurality of VRUs, and (iii) direction of motion of the plurality of VRUs, and wherein the output data comprises the one or more clusters of VRUs.

9. The method of claim 7 or claim 8, wherein the velocity associated with the collective motion of the one or more VRUs of the respective cluster comprises an average velocity of the one or more VRUs of the respective cluster.

10. The method of any of claims 7-9, wherein each of the one or more clusters of VRUs is further associated with a spread of velocities of one or more VRUs of the respective cluster of VRUs, and wherein predicting the one or more VRU-blocked regions for the time interval comprises:

estimating a change in the geometric shape of the respective cluster of VRUs for the time interval.

11. The method of any of claims 7-10, wherein determining the driving path of the vehicle comprises:
determining a speed of motion for the driving path of the vehicle based at least on:

a minimum distance from the driving path to a VRU of the plurality of VRUs, or

a number of VRUs within a relevance area around the driving path of the vehicle.

12. The method of claim 11, wherein the speed of motion for the driving path of the vehicle decreases with increasing the number of VRUs within the relevance area.

13. An autonomous vehicle comprising:

a sensing system configured to obtain sensing data associated with a driving environment;

a data processing system configured to:

apply one or more clustering metrics to a plurality of vulnerable road users (VRUs) in the driving environment to form one or more clusters of VRUs, each of the one or more clusters of VRUs associated with:

a geometric shape enclosing one or more VRUs of a respective cluster of VRUs, and
a velocity associated with a collective motion of the one or more VRUs of the respective cluster of VRUs;

predict, using the geometric shapes and the velocities associated with the one or more clusters of VRUs, one or more VRU-blocked regions for a time interval; and
determine, for the time interval and in view of the one or more VRU-blocked regions, a driving path of the vehicle in the driving environment; and

a vehicle control system configured to:

direct the autonomous vehicle on the determined driving path.

14. The autonomous vehicle of claim 13, wherein to apply the one or more clustering metrics to the one or more VRUs of the respective cluster of VRUs, the data processing system is to determine at least one of:

that a distance from each of the one or more VRUs to a reference point location of the respective cluster of VRUs is below a threshold distance; or
that a difference of velocities of the one or more VRUs of the respective cluster of VRUs is below a threshold difference; and/or
wherein to apply the one or more clustering metrics to the plurality of VRUs, the data processing system is to: evaluate a Euclidean distance in a location-velocity space between each of the one or more VRUs of the respective cluster of VRUs and a centroid of the respective cluster of VRUs.

15. The autonomous vehicle of claim 13 or claim 14, wherein the data processing system is further configured to: determine a speed of motion for the driving path of the vehicle based at least on:

a minimum distance from the driving path to a VRU of the plurality of VRUs, or
a number of VRUs within a relevance area around the driving path of the vehicle.

**100**

Driving Environment
101

**Sensing System 110**

| Radar 112 | Lidar 114 | Microphone Sensor(s) 116 | Camera(s) 118 | IR Sensor(s) 119 |

**Data Processing System 120**

Crowd Analyzer
132

Perception and
Planning System 130

Positioning Subsystem 122

System Memory 126

Roadgraph (Map) Info 124

Processor 128

Vehicle Control System
(VCS) 140

| Powertrain, Brakes & Steering 150 | Vehicle Electronics 160 | Signaling 170 |

# FIG. 1

FIG. 2

FIG. 3A

EP 4 704 065 A1

**FIG. 3B**

FIG. 3C

$$\vec{V_1}$$

$$\vec{V_4}$$

320

321

323

$$\vec{V_2}$$

322

$$\vec{V_3}$$

**FIG. 3D**

$$\vec{V_1}$$

320

325

322

$$\vec{V_3}$$

$$\vec{V_5}$$

**FIG. 3E**

$$\vec{R} = \vec{R_0} + \vec{V}\,t$$

$$\vec{V}\,t$$

320

$$\vec{R_0}$$

**FIG. 3F**

2nd Prediction Horizon 341

1st Prediction Horizon 340

Time

1st Cluster
Formation 330

2nd Cluster
Formation 331

3rd Cluster
Formation 332

**FIG. 3G**

EP 4 704 065 A1

Medium Density 404
(Medium Maximum Speed)

Low Density 406
(Higher Maximum Speed)

High Density 408
(Lower Maximum Speed)

**FIG. 4A**

**FIG. 4B**

EP 4 704 065 A1

FIG. 5A

FIG. 5B

FIG. 5C

600 ⌐

Obtain sensing data associated with a driving environment 610

Detect a plurality of vulnerable road users (VRUs) in the driving environment 620

Apply clustering metrics to the plurality of VRUs to form cluster(s) of VRUs associated with: (i) a geometric shape enclosing one or more VRM(s) of a respectful cluster of VRUs and (ii) a velocity of collective motion of the VRUs 630

Predict, using the geometric shapes and the velocities associated with the clusters, VRU-blocked region(s) for a time interval 640

Determine, for the time interval and in view of the VRU-blocked region(s), a driving path of the vehicle 650

Determine that a distance from VRUs to a reference point location of a cluster is below a threshold distance 632

Determine that a difference of velocities of the VRUs of a cluster of is below a threshold difference 634

Evaluate Euclidean distance in a location-velocity space between VRU(s) and a centroid a cluster of VRUs 636

Estimate a change in the geometric shape of a cluster of VRUs for the time interval 642

Determine a speed of motion of the vehicle based on (i) a minimum distance from the driving path to VRUs and (ii) a number of VRUs within a relevance area 662

**FIG. 6**

700

Processing Device 702

Processing Logic
703

Main Memory 704

Instructions
722

Static Memory
706

Network Interface
Device
708

Network
720

730

Video Display
710

Alpha-Numeric
Input Device
712

Cursor Control
Device
714

Signal Generation
Device
716

Data Storage Device 718

Computer-Readable
Storage Medium 728

Instructions
722

**FIG. 7**

**EUROPEAN SEARCH REPORT**

Application Number

EP 25 19 8538

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/095384 A1 (SHARMA BANJADE VESH RAJ [US] ET AL) 30 March 2023 (2023-03-30) <br> * abstract * <br> * figures 1,3,7 * <br> * paragraphs [0002], [0027], [0033], [0038], [0041] - [0047], [0048] - [0058], [0083], [0084], [0089], [0091], [0092], [0098], [0114] * <br> * paragraphs [0124], [0126], [0127], [0132], [0170] - [0179], [0181], [0182], [0186] - [0194], [0201] * <br> * paragraphs [0204] - [0260], [0277], [0303], [0335], [0348] - [0350], [0431] - [0434] * <br> * tables 0-2,1.3-2,1.5.4-3,1.5.4-4,1.5.4-5,1.5.4-39 * <br> * claims 40-64 * <br> ----- <br> -/-- | 1-15 | INV. <br> G08G1/16 |

TECHNICAL FIELDS
SEARCHED      (IPC)

G08G

The present search report has been drawn up for all claims

| Place of search | Date of completion of the search | Examiner |
|---|---|---|
| The Hague | 16 January 2026 | Quartier, Frank |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................
& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 25 19 8538

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/383750 A1 (SHARMA BANJADE VESH RAJ [US] ET AL) 1 December 2022 (2022-12-01) * abstract * * figures 1-3 * * paragraphs [0002], [0023], [0024], [0029], [0034], [0037] - [0042], [0045], [0046], [0062] - [0065], [0070], [0072], [0079], [0083] * * paragraphs [0092], [0093], [0096], [0098] - [0100], [0103], [0106], [0108], [110114], [0117], [0129], [0130] * * paragraphs [0159] - [0162], [0167], [0170], [0173], [0175], [0192], [0193], [0215], [0252], [0258] - [0260] * * paragraphs [0278], [0296], [0297], [0299], [0303] - [0317], [0327] - [0343], [0347], [0348], [0355] - [0357] * * paragraphs [0359], [0360], [0384], [0394], [0396] - [0398], [0433], [0437] - [0442], [0446], [0448] * * paragraphs [0515], [0516], [0563] - [0569] * * tables 1.3-3,1.3-4,1.3-5,1.3.2-1,2.2-F.7.6,2.2-F.7.7 * * tables 2.2-F.7.8,2.2-F.7.9,2.2-17 * * claims 40-64 * | 1-15 | |

-----

TECHNICAL FIELDS
SEARCHED (IPC)

The present search report has been drawn up for all claims

| Place of search | Date of completion of the search | Examiner |
|---|---|---|
| The Hague | 16 January 2026 | Quartier, Frank |

EPO FORM 1503 03.82 (P04C01)

## ANNEX TO THE EUROPEAN SEARCH REPORT
## ON EUROPEAN PATENT APPLICATION NO.

EP 25 19 8538

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2026

| Patent document cited in search report | Publication date | Patent family member(s) | Publication date |
|---|---|---|---|
| US 2023095384 A1 | 30-03-2023 | DE 112020006966 T5<br>US 2023095384 A1<br>WO 2021194590 A1 | 26-01-2023<br>30-03-2023<br>30-09-2021 |
| US 2022383750 A1 | 01-12-2022 | EP 4088267 A1<br>US 2022383750 A1<br>WO 2021141770 A1 | 16-11-2022<br>01-12-2022<br>15-07-2021 |

EPO FORM P0459

For more details about this annex : see Official Journal of the European Patent Office, No. 12/82